# EUROPEAN PATENT APPLICATION

(11) **EP 1 679 323 A1**
(43) Date of publication of application: **12.07.2006**
(21) Application number: 04792745.4
(22) Date of filing: 21.10.2004
(51) Int. Cl.: C08F 8/42, C08F 210/16, C08F 220/26, C08F 232/08

(54) **IONOMER, PROCESS FOR PRODUCTION THEREOF AND MOLDED ARTICLE**

(30) Priority: 24.10.2003 JP 2003364201; 19.08.2004 JP 2004239327
(71) Applicant: JSR Corporation, Tokyo 104-8410 (JP)
(72) Inventor: KANAE, Kentarou, c/o JSR Corporation, Tokyo 1048410 (JP); ABE, Yutaka, c/o JSR Corporation, Tokyo 1048410 (JP); TANAKA, Minoru, c/o JSR Corporation, Tokyo 1048410 (JP); HAYAKAWA, Toshiyuki, c/o JSR Corporation, Tokyo 1048410 (JP)
(74) Representative: TBK-Patent
(86) International application number: PCT/JP2004/015596
(87) International publication number: WO 2005/040236

(57) **Abstract**

The present invention provides an ionomer obtained by subjecting, to a heat treatment, metal compound particles having an average particle diameter of 1 µm or less and a functional group-containing polymer, which is equivalent to conventional olefin-based thermoplastic elastomers in rubber elasticity, flexibility and moldability, has good mechanical properties and abrasion resistance and is superior particularly in tensile strength at break, mar resistance and gloss; a process for production thereof; and a molded article.

## Description

### Technical Field

The present invention relates to an ionomer which is superior in rubber elasticity, flexibility, mechanical properties (e.g. tensile strength at break), mar resistance, gloss, abrasion resistance, moldability, heat resistance and weather resistance and suitable as a thermoplastic elastomer; a process for production thereof; and a molded article.

### Background Art

As olefin-based thermoplastic elastomers, there have been known, for example, one obtained by mixing an olefin-based resin with an olefin-based copolymer rubber and one obtained by subjecting an olefin-based resin and an olefin-based copolymer rubber to partial crosslinking using a crosslinking agent. These olefin-based thermoplastic elastomers are superior in heat resistance, weather resistance, low-temperature resistance and moldability and yet are a relatively low-cost material; therefore, they are drawing attention particularly in fields such as automotive parts and the like, as a substitute material for metal part for achieving mainly a lighter weight, a substitute material for RIM urethane part for achieving mainly a longer part life and cost reduction, a substitute material for vulcanized rubber for achieving mainly simplified processing, recycling and cost reduction, or a substitute material for soft polyvinyl chloride for achieving mainly a longer part life and protection of global environment. Thus, the demand for olefin-based thermoplastic elastomers is increasing year by year.

However, conventional olefin-based thermoplastic elastomers are low in surface mar resistance (mar resistance); therefore, they have a problem in that they are unsuitable as a material for the surface layer of a molded article requiring mar resistance, such as inner panel, console box or the like.

Recently, there has been proposed an olefin-based thermoplastic elastomer superior in mar resistance, comprising an olefin-based random copolymer (which is a copolymer of ethylene, an α-olefin and a functional group-containing unsaturated monomer) and a metal ion (which functions so as to crosslink the olefin-based random copolymer) (see, for example, Patent Document 1). This olefin-based thermoplastic elastomer is obtained, for example, by subjecting the above-mentioned olefin-based random copolymer and a metal compound to a dynamic heat treatment. The olefin-based thermoplastic elastomer is equivalent to conventional olefin-based thermoplastic elastomers in rubber elasticity, flexibility and moldability and, moreover, has good mechanical properties and abrasion resistance and is superior particularly in mar resistance.

For such a superior olefin-based thermoplastic elastomer, further improvements have been needed in tensile strength at break, mar resistance and gloss.

Further, in the olefin-based thermoplastic elastomer having the above-mentioned superior properties, described in the Patent Document 1, a relatively long time has been necessary for production thereof because masking and demasking are needed in producing an olefin-based random copolymer from "a an unsaturated monomer having a particular functional group".

Patent Document 1: JP-A-2003-82023

### Disclosure of the Invention

The present invention has bee made in view of the above-mentioned problems of the prior art. The present invention aims at providing an ionomer which is equivalent to conventional olefin-based thermoplastic elastomers in rubber elasticity, flexibility and moldability and, moreover, has good mechanical properties and abrasion resistance and is superior particularly in tensile strength at break, mar resistance and gloss; a process for production thereof; and a molded article.

The present invention further aims at providing a process for producing an olefin-based thermoplastic elastomer which is equivalent to conventional olefin-based thermoplastic elastomers in rubber elasticity, flexibility and moldability and, moreover, has good mechanical properties and abrasion resistance and is superior particularly in mar resistance, that is, a process for producing an ionomer which enables easy production of an olefin-based random copolymer from monomers used; and an ionomer obtained by the above process for production of an ionomer.

In order to achieve the above aims, the present invention provides the following ionomers, processes for production thereof, and molded articles.

[1] An ionomer obtained by reacting metal compound particles having an average particle diameter of 1 µm or less, with a functional group-containing polymer (the first embodiment of the ionomer of the present invention).

[2] An ionomer according to [1], wherein a proportion of the metal compound particles is 0.01 to 10 parts by mass relative to 100 parts by mass of the functional group-containing polymer.

[3] An ionomer according to [1] or [2], wherein a metal component in the metal compound particles is at least one kind of metal selected from the group consisting of sodium, magnesium, calcium, zirconium, zinc and aluminum.

[4] An ionomer according to [1] or [2], wherein the metal compound particles are made of zinc oxide.

[5] An ionomer according to any of [1] to [4], wherein the functional group-containing polymer is an olefin-based random copolymer obtained by copolymerizing ethylene, an α-olefin having 3 to 10 carbon atoms, a functional group-containing unsaturated monomer and, as necessary, a non-conjugated diene.

[6] An ionomer according to [5], wherein a functional group in the functional group-containing unsaturated monomer is carboxyl group, hydroxyl group, epoxy group or sulfonic acid group.

[7] An ionomer according to [5], wherein the functional group-containing unsaturated monomer is a functional cyclic compound represented by the following general formula (1): 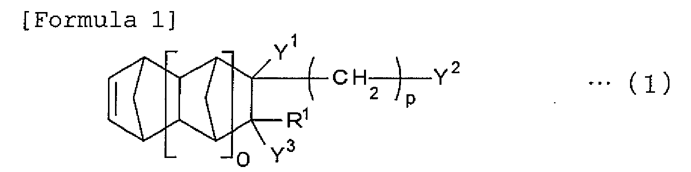 [in the general formula (1), R¹ is a hydrogen atom or a hydrocarbon group having 1 to 10 carbon atoms; Y¹, Y² and Y³ are each independently a hydrogen atom, a hydrocarbon group having 1 to 10 carbon atoms or -COOH with a proviso that at least one of Y¹, Y² and Y³ is -COOH and, when two or more of Y¹, Y² and Y³ are -COOH, they may combine to each other to form an acid anhydride [-CO-(O)-CO-]; o is an integer of 0 to 2; and p is an integer of 0 to 5].

[8] An ionomer according to [5], wherein the olefin-based random copolymer is a copolymer obtained by copolymerizing 35 to 94.99 mol % of ethylene, 5 to 50 mol % of an α-olefin having 3 to 10 carbon atoms, 0.01 to 5 mol % of a functional cyclic compound represented by the general formula (1) and 0 to 10 mol % of a non-conjugated diene.

[9] A process for producing an ionomer, which comprises a step of subjecting a functional group-containing polymer to a heat treatment or a dynamic heat treatment in the presence of metal compound particles having an average particle diameter of 1 µm or less (the first embodiment of the process for producing an ionomer according to the present invention).

[10] A molded article obtained by molding a molding material containing an ionomer set forth in any of [1] to [8], by a molding method selected from injection molding, extrusion molding, vacuum molding, powder slush molding, calender molding, transfer molding, solvent casting and press molding.

[11] A process for producing an ionomer, which comprises subjecting, to a dynamic heat treatment, a metal compound and an olefin-based random copolymer obtained by copolymerizing ethylene, an α-olefin having 3 to 10 carbon atoms and a functional cyclic compound represented by the following general formula (2) (the second embodiment of the process for producing an ionomer according to the present invention): 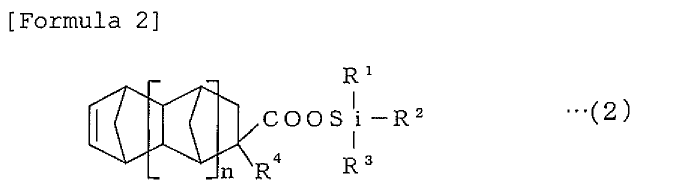 [in the general formula (2), n is 0 or 1; and R¹, R², R³ and R⁴ are each independently a hydrogen atom, a halogen atom or a mono-valent organic group].

[12] A process for producing an ionomer according to [11], wherein, in the above mentioned general formula (2), R¹, R², R³ and R⁴ are each independently a hydrogen atom or a hydrocarbon group having 1 to 20 carbon atoms.

[13] A process for producing an ionomer according to [11] or [12], wherein, in the above mentioned general formula (2), all of R¹, R² and R³ are an ethyl group, or one of R¹, R² and R³ is a tert-butyl group and the remaining two are each a methyl group.

[14] A process for producing an ionomer according to any of [11] to [13], wherein, in the above mentioned general formula (2), R⁴ is a methyl group.

[15] A process for producing an ionomer according to any of [11] to [14], wherein the olefin-based random copolymer is obtained by copolymerizing 35 to 94.99 mol % of the ethylene, 5 to 50 mol % of the α-olefin having 3 to 10 carbon atoms and 0.01 to 5 mol % of the functional cyclic compound represented by the above mentioned general formula (2), and 100 parts by mass of the olefin-based random copolymer and 0.1 to 20 parts by mass of the metal compound are subjected to a dynamic heat treatment at 120 to 350°C at a shear rate of 10 to 2,000/sec.

[16] A process for producing an ionomer according to any of [11] to [15], wherein the olefin-based random copolymer is obtained by copolymerizing the ethylene, the α-olefin having 3 to 10 carbon atoms, the functional cyclic compound represented by the above mentioned general formula (2) and a non-conjugated diene.

[17] A process for producing an ionomer according to [16], wherein the olefin-based random copolymer is obtained by copolymerizing the ethylene, the α-olefin, the functional cyclic compound represented by the above mentioned general formula (2) and 10 mol % or less of the non-conjugated diene.

[18] A process for producing an ionomer according to any of [11] to [17], wherein the metal compound is a metal oxide or a metal hydroxide.

[19] An ionomer obtained by a process for producing an ionomer set forth in any of [11] to [18] (the second embodiment of the ionomer of the present invention).

[20] A process for producing an ionomer composition, which comprises subjecting 100 parts by mass of an olefin-based random copolymer obtained by copolymerizing 35 to 94.99 mol % of ethylene, 5 to 50 mol % of an α-olefin having 3 to 10 carbon atoms, 0.01 to 5 mol % of a functional cyclic compound represented by the following general formula (2) and 0 to 10 mol % of a non-conjugated diene, 0.1 to 20 parts by mass of a metal compound, and 300 parts by mass or less of a polymer compound selected from a thermoplastic resin and a rubber and/or 100 parts by mass or less of a softening agent, to a dynamic heat treatment at 120 to 350°C at a shear rate of 10 to 2,000/sec: 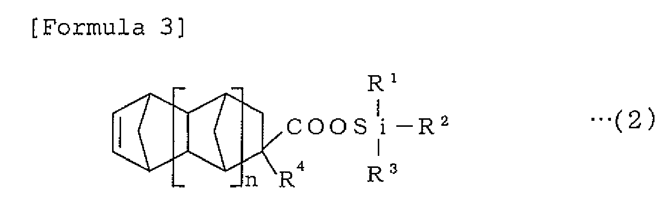 [in the general formula (2), n is 0 or 1; and R¹, R², R³ and R⁴ are each independently a hydrogen atom, a halogen atom or a mono-valent organic group].

[21] An ionomer composition obtained by a process for producing an ionomer composition set forth in [20].

The first embodiment of the ionomer of the present invention is equivalent to conventional olefin-based thermoplastic elastomers in rubber elasticity, flexibility and moldability, and yet has good mechanical properties and abrasion resistance and is superior particularly in tensile strength at break, mar resistance and gloss; is easily molded, for example, by injection molding, extrusion molding, vacuum molding, powder slush molding, calender molding, transfer molding, solvent casting or press molding; has superior properties as a thermoplastic elastomer; and can provide a molded article which has good rubber elasticity, flexibility and mechanical properties and is superior particularly in tensile strength at break, mar resistance and gloss. The molded article of the present invention may be used by being bonded or laminated with an ordinary olefin-based vulcanized rubber molded article or an ordinary olefin-based thermoplastic elastomer molded article. The above-mentioned first embodiment of the ionomer of the present invention can be produced advantageously according to the first embodiment of the process for producing an ionomer according to the present invention.

In the second embodiment of the process for producing an ionomer according to the present invention, a metal compound and an olefin-based random copolymer obtained by copolymerizing ethylene, an α-olefin having 3 to 10 carbon atoms and a particular functional cyclic compound are subjected to a dynamic heat treatment; therefore, there can be obtained an ionomer which is equivalent to conventional thermoplastic elastomers in rubber elasticity, flexibility and moldability, and yet has good mechanical properties and abrasion resistance and is superior particularly in mar resistance. Since there is used, as the particular functional cyclic compound, a functional cyclic compound represented by the previously-mentioned general formula (2), the olefin-based random copolymer can be produced easily from the functional cyclic compound, making the production step efficient. The second embodiment of the ionomer of the present invention is an ionomer produced by the second embodiment of the process for producing an ionomer according to the present invention; accordingly, it is equivalent to conventional olefin-based thermoplastic elastomers in rubber elasticity, flexibility and moldability, and yet has good mechanical properties and abrasion resistance and is superior particularly in mar resistance.

### Brief Description of the Drawing

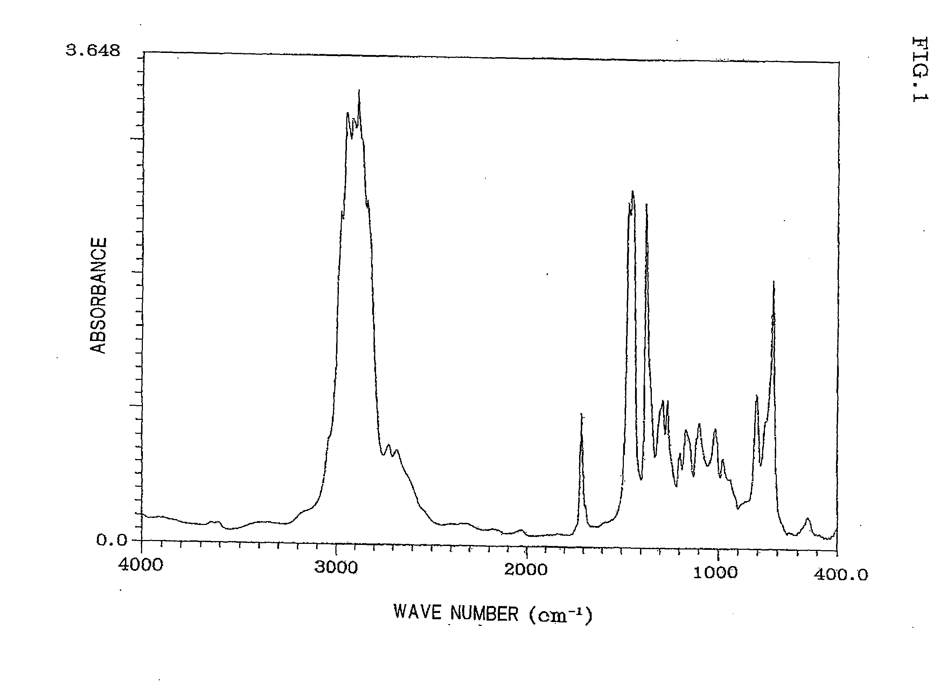

Fig. 1 indicates an infrared absorption spectrum of the olefin-based random copolymer (F) obtained in Examples.

### Best Mode for Carrying Out the Invention

Hereinbelow, the best mode for carrying out the invention (the best mode is hereinafter referred to as "operation mode") is described specifically. However, the present invention is not restricted to the following operation mode and it should be understood that as long as there is no deviation from the scope of the present invention, design modifications, improvements, etc. can be added thereto as necessary based on the ordinary knowledge of those skilled in the art.

Hereinbelow, description is made on the operation modes of the first embodiment of the ionomer of the present invention, the first embodiment of the process for producing an ionomer according to the present invention, and the molded article of the present invention. The first embodiment of the ionomer of the present invention is obtained by an operation mode of reacting a functional group-containing polymer with metal compound particles having an average particle diameter of 1 µm or less (the particles are hereinafter referred to as "particular metal compound particles"). As the functional group-containing polymer, there is preferably used an olefin-based random copolymer obtained by copolymerizing at least ethylene, an α-olefin having 3 to 10 carbon atoms and a functional group-containing compound (the copolymer is hereinafter referred to as "particular, functional group-containing copolymer").

### [Particular, functional group-containing copolymer]

In the particular, functional group-containing copolymer used for obtaining an ionomer by the present operation mode, it is preferred to use ethylene as a monomer component. The proportion of ethylene used is preferably 35 to 94.99 mole % of the total monomer components, more preferably 40 to 89.99 mol %, particularly preferably 45 to 84.99 mol %. When the proportion of ethylene used is less than 35 mol %, it may be difficult to copolymerize a functional cyclic compound (to be described later). Meanwhile, when the proportion of ethylene used is more than 94.99 mol %, it may be difficult to obtain a thermoplastic elastomer having required rubber elasticity.

In the particular, functional group-containing copolymer, it is preferred to also use an α-olefin having 3 to 10 carbon atoms (hereinafter referred to as "particular α-olefin") as a monomer component. Use of an α-olefin having 10 or less carbon atoms makes easier the copolymerizability between the α-olefin and other monomers. As specific examples of the particular α-olefin, there can be mentioned propylene, 1-butene, 1-pentene, 4-methyl-pentene-1, 1-hexene, 1-heptene, 1-octene and 1-decene. Of these, propylene, 1-butene, 1-hexene and 1-octene are preferred, and propylene and 1-butene are more preferred. These compounds can be used singly or in combination of two or more kinds.

The proportion of the particular α-olefin used is preferably 5 to 50 mol % of the total monomer components, more preferably 10 to 45 mol %, particularly preferably 15 to 40 mol %. When the proportion of the particular α-olefin used is less than 5 mol %, it may be difficult to obtain a thermoplastic elastomer having required rubber elasticity. Meanwhile, when the proportion of the particular α-olefin used is more than 50 mol %, the resulting elastomer may be low in durability.

In the particular, functional group-containing copolymer, it is preferred to further use a functional group-containing unsaturated monomer capable of forming an ionomer (the monomer is hereinafter referred to as "functional group-containing unsaturated monomer") as a monomer component. As the functional group-containing unsaturated monomer, there is preferred one containing, as the functional group, carboxyl group, hydroxyl group, epoxy group or sulfonic acid group. As such a functional group-containing unsaturated monomer, there is preferably used a functional cyclic compound represented by the previously-shown general formula (1) (the compound is hereinafter referred to as "particular functional cyclic compound").

In the general formula (1) representing the particular functional cyclic compound, R¹ is a hydrogen atom or a hydrocarbon group having 1 to 10 carbon atoms; Y¹, Y² and Y³ are each independently a hydrogen atom, a hydrocarbon group having 1 to 10 carbon atoms or -COOH with a proviso that at least one of Y¹, Y² and Y³ is -COOH and, when two or more of Y¹, Y² and Y³ are -COOH, they may combine to each other to form an acid anhydride [-CO-(O)-CO-]. As specific examples of the hydrocarbon group having 1 to 10 carbon atoms, there can be mentioned methyl group, ethyl group, propyl group, butyl group, pentyl group, hexyl group, heptyl group, octyl group, nonyl group and decyl group. The number of repetition O is an integer of 0 to 2. When this repetition number o is 3 or more, it may be difficult to copolymerize the cyclic compound with other monomers. The number of repetition p is an integer of 0 to 5.

The particular functional cyclic compound can be produced by subjecting cyclopentadiene and a functional group-containing unsaturated compound to a Diels-Alder reaction (a condensation reaction). As specific examples of the particular functional cyclic compound, there can be mentioned 5,6-dimethyl-5,6-dicarboxy-bicyclo[2.2.1]-2-heptene; 5,6-diethyl-5,6-dicarboxy-bicyclo[2.2.1]-2-heptene; 5,6-dimethyl-5,6-bis(carboxymethyl)-bicyclo[2.2.1]-2-heptene; 5,6-diethyl-5,6-bis(carboxymethyl)-bicyclo[2.2.1]-2-heptene; 5-methyl-5-carboxy-bicyclo[2.2.1]-2-heptene; 5-ethyl-5-carboxy-bicyclo[2.2.1]-2-heptene; 5-carboxy-5-carboxymethyl-bicyclo[2.2.1]-2-heptene; 5-methyl-5-carbxymethyl-bicyclo[2.2.1]-2-heptene; 5-ethyl-5-carboxymethyl-bicyclo[2,2,1]-2-heptene; 8,9-dimethyl-8,9-dicarboxy-tetracyclo[4.4.0.1^{2,5}.1^{7,10}]-3-dodecene; 8, 9-diethyl-8, 9-dicarboxy-tetracyclo[4.4.0.1^{2,5}.1^{7,10}]-3-dodecene; 8-methyl-8-carboxy-tetracyclo [4.4.0.1^{2,5}.1^{7,10}]-3-dodecene; and 8-ethyl-8-carboxy-tetracyclo[4.4.0.1^{2,5} .1^{7,10}]-3-dodecene.

The proportion of the functional group-containing unsaturated monomer used is preferably 0.01 to 5 mol % of the total monomer components, more preferably 0.01 to 4 mol %. When the proportion of the functional group-containing unsaturated monomer used is less than 0.01 mol %, the resulting ionomer has a low crosslink density and tends to be low in mechanical strengths and heat resistance. Meanwhile, when the proportion of the functional group-containing unsaturated monomer used is more than 5 mol %, the resulting ionomer has too high a crosslink density and tends to be too high in hardness and be brittle.

In the particular, functional group-containing copolymer, there may be used, besides the above-mentioned monomer components, a non-conjugated diene as an optional monomer component. As specific examples of the non-conjugated diene, there can be mentioned straight chain acyclic dienes such as 1,4-hexadiene, 1,6-hexadiene, 1,5-hexadiene and the like; branched chain acyclic dienes such as 5-methyl-1,4-hexadiene, 3,7-dimethyl-1,6-octadiene, 5,7-dimethylocta-1,6-diene, 3,7-dimethyl-1,7-octadiene, 7-methylocta-1,6-diene, dihydromyrcene and the like; and alicyclic dienes such as tetrahydroindene, methyltetrahydroindene, dicyclopentadiene, bicyclo[2.2.1]-hepta-2,5-diene, 5-methylene-2-norbrnene, 5-ethylidene-2-norbornene, 5-propenyl-2-norbornene, 5-isopropylidene-2-norbornene, 5-cyclohexylidene-2-norbornene, 5-vinyl-2-norbornene and the like. These compounds may be used singly or in combination of two or more kinds. Of the above-mentioned non-conjugated dienes, preferred are 1,4-hexadiene, dicyclopentadiene, 5-ethylidene-2-norbornene, etc. The proportion of the non-conjugated diene used is preferably 0 to 10 mol % of the total monomer components. When the proportion of the non-conjugated diene used is more than 10 mol %, the resulting ionomer may be low in durability.

In the particular, functional group-containing copolymer, the polystyrene-reduced weight-average molecular weight Mw measured by gel permeation chromatography (GPC) is ordinarily 1,000 to 3,000,000, preferably 3,000 to 1,000,000, more preferably 5,000 to 700,000. Also, its melt flow rate (MFR) measured at 230°C under a load of 10 kg is preferably 0.01 to 100 g/10 min, more preferably 0.05 to 50 g/10 min. Also, its glass transition temperature is preferably -90 to 50°C, particularly preferably -70 to 10°C. The particular, functional group-containing copolymer may be an oil-extended polymer wherein a softening agent has been added during the production (polymerization).

Such a particular, functional group-containing copolymer can be produced by an appropriate known polymerization process. There is no particular restriction as to the specific process; however, there can be preferably used, for example, a process described in JP-A-2001-247529.

### [Particular metal compound particles]

The particular metal compound particles used in the present invention functions so that the metal component thereof combines to the functional group of the particular, functional group-containing copolymer by ionic bond and thereby a crosslinked structure is formed between the molecules of the particular, functional group-containing copolymer. The particular, metal compound particles need to have an average particle diameter of 1 µm or less, preferably 0.8 µm or less. Here, the average particle diameter is an average of primary particles diameters which is determined from the photograph taken using a transmission electron microscope. Use of metal compound particles having too large an average particle diameter tends to give an ionomer low in mechanical strengths and mar resistance.

As the metal compound constituting the particular metal compound particles, there can be used a metal oxide, a metal hydroxide, a metal salt, a metal complex, etc. As specific examples of the metal component in such a metal compound, there can be mentioned metals of groups I to VIII of periodic table, such as lithium, potassium, sodium, aluminum, zirconium, magnesium, calcium, barium, cesium, strontium, rubidium, titanium, zinc, copper, iron, tin, lead and the like. Of these, preferred are sodium, magnesium, calcium, zirconium, zinc and aluminum.

As specific examples of the metal oxide constituting the particular metal compound particles, there can be mentioned CuO, MgO, BaO, ZnO, Al₂O₃, Fe₂O₃, SnO, CaO, TiO₂, ZrO₂, etc. As specific examples of the metal hydroxide constituting the particular metal compound particles, there can be mentioned LiOH, NaOH, KOH, Cu(OH)₂, Cu₂O(OH)₂, Mg(OH)₂, Mg₂O(OH)₂, Ba(OH)₂, Zn (OH) ₂, Sn(OH)₂, Ca(OH)₂, etc. These metal compounds can be used singly or in combination of two or more kinds. The metal compound particles composed of these metal compounds may be treated with a silane coupling agent or a higher fatty acid in order to increase the dispersibility of the particles in the particular, functional group-containing copolymer.

The proportion of the particular metal compound particles used is ordinarily 0.01 to 10 parts by mass, preferably 0.05 to 9 parts by mass, particularly preferably 0.1 to 8 parts by mass relative to 100 parts by mass of the particular, functional group-containing copolymer. When the proportion is less than 0.01 part by mass, the resulting ionomer is low in crosslink density and tends to be low in mechanical strengths and mar resistance. Meanwhile, when the proportion is more than 10 parts by mass, the resulting ionomer has too high a crosslink density and tends to be too high in hardness and be brittle. Therefore, it is not preferable.

In the ionomer of the present operation mode, there can be used, besides the particular metal compound particles, a metal salt of carboxylic acid as an activating agent in order to increase the miscibility of the particular metal compound particles with the particular, functional group-containing copolymer and also increase the heat resistance of the ionomer obtained. As the metal salt of carboxylic acid, a metal salt of mono-valent carboxylic acid is preferred and the carboxylic acid is preferred to have 3 to 23 carbon atoms. As specific examples of such a carboxylic acid, there can be mentioned propionic acid, acrylic acid, butyric cid, methacrylic acid, valeric acid, hexanoic acid, octanoic acid, 2-ethylhexanoic acid, decanoic acid, palmitic acid, myristic acid, lauric acid, stearic acid, oleic acid, behenic acid, naphthenic acid, benzoic acid, and the like. As the metal component of the metal salt used as an activating agent, there can be appropriately selected from the metals mentioned above as the metal component of the particular metal compound particles. The metal component of the metal salt is preferably the same as the metal component of the particular metal compound particles.

The proportion of the metal salt used as an activating agent is ordinarily 0.3 to 20 parts by mass, preferably 1 to 15 parts by mass relative to 100 parts by mass of the particular, functional group-containing copolymer. When the proportion is less than 0.3 part by mass, the effect obtained by using the activating agent is not exhibited sufficiently. Meanwhile, when the proportion is more than 20 arts by mass, the resulting ionomer may be strikingly low in oil resistance and mechanical strengths.

### [Ionomer]

The ionomer of the present operation mode is obtained by subjecting the particular, functional group-containing copolymer to a heat treatment or a dynamic heat treatment, preferably to a dynamic heat treatment in the presence of the particular metal compound particles and the activating agent used as necessary. Here, the "dynamic heat treatment" refers to both of a treatment of applying a shear force and a treatment of applying a heat. Such a dynamic heat treatment can be conducted, for example, by using a melting and kneading apparatus ordinarily used for preparation or processing of resin or elastomer. This melting and kneading apparatus may be a batch type or a continuous type. As specific examples of the melting and kneading apparatus, there can be mentioned batch type melting and kneading apparatuses such as open type mixing roll, closed type Banbury mixer, kneader and the like; and continuous melting and kneading apparatuses such as single screw extruder, continuous double screw extruder of co-rotating type, continuous double screw extruder of counter-rotating type, and the like.

Preferably, the dynamic heat treatment employed for production of the ionomer of the present operation mode is conducted to a premix containing a particular, functional group-containing copolymer, particular metal compound particles and an activating agent used as necessary. As specific methods for conducting the dynamic heat treatment, the following methods (1) and (2) can be mentioned.

(1) A method for conducting a dynamic heat treatment by continuously applying shear for heat generation using a double screw extruder, to a mixture containing a particular, functional group-containing copolymer, particular metal compound particles and an activating agent used as necessary.

(2) A method for conducting a dynamic heat treatment by applying shear for heat generation using a batch type kneader, to a mixture containing a particular, functional group-containing copolymer, particular metal compound particles and an activating agent used as necessary.

The conditions of the dynamic heat treatment differ depending upon the melting point of the particular, functional group-containing copolymer used, the kind of the particular metal compound particles, the kind of the melting and kneading apparatus used, etc. However, the treatment temperature is 80 to 350°C, preferably 100 to 300°C, the treatment time is 20 seconds to 320 minutes, preferably 30 seconds to 25 minutes, and the shear force applied to the mixture is 10 to 2,000/sec, preferably 100 to 1,000/sec in terms of shear rate.

In the present operation mode, there can be used, besides the dynamic heat treatment, a heat treatment for obtaining an ionomer, which comprises subjecting a particular, functional group-containing copolymer to a heat treatment in an appropriate solvent in the presence of particular metal compound particles and an activating agent used as necessary. As a specific method for conducting the heat treatment, the following method (3) can be mentioned.

(3) A method for conducting a heat treatment, which comprises mixing, with heating, a solution of a particular, functional group-containing copolymer in an appropriate solvent and a solution or dispersion of particular metal compound particles and an activating agent used as necessary, in an appropriate solvent and subjecting the resulting mixture to solvent removal.

The solvent used in the method (3) is not particularly restricted; however, there can be used preferably, for example, aliphatic hydrocarbons, alicyclic hydrocarbons, aromatic hydrocarbons and halides thereof because the particular, functional group-containing copolymer is easily soluble therein. As specific examples of such solvents, there can be mentioned butane, pentane, hexane, heptane, 2-butane, 2-methyl-2-butane, cyclopentane, methylcyclopentane, cyclohexane, isooctane, benzene, toluene, xylene, chlorobenzene, dichloromethane, dichloroethane, and the like. When the solubility of the particular metal compound particles and activating agent used, in the above solvent is low, there may be prepared a dispersion wherein the particular metal compound particles and activating agent are dispersed in the solvent in a suspended state, or other solvent and/or an additive may be added in order to dissolve the particular metal compound particles and activating agent. The proportion of the particular, functional group-containing copolymer in the solution is preferably 0.1 to 60% by mass, more preferably 0.2 to 50% by mass. The proportion of the total of the particular metal compound particles and the activating agent in the solution or dispersion is preferably 0.01 to 60% by mass, more preferably 0.05 to 50% by mass. The mixing of the solution of the particular, functional group-containing copolymer with the solution or dispersion of the particular metal compound particles and activating agent can be conducted using a solution stirrer used ordinarily, and the temperature employed in the mixing is preferably 20°C or more, more preferably 30°C or more. Further, in the mixing, an appropriate catalyst may be added in order to accelerate a metal-crosslinking reaction. The resulting mixture is subjected to solvent removal by a well-known method such as heating, pressure reduction, steam distillation or the like, whereby an ionomer of the present operation mode is obtained. Or, the mixture is cast on an appropriate substrate, followed by solvent removal, whereby an ionomer of the present operation mode can be obtained as a film.

The thus-obtained first embodiment of the ionomer of the present invention has a melt flow rate (MFR) of 0.5 g/10 min or more, preferably 1 g/10 min or more as measured at 230°C under a load of 10 kg, and an elongation set of 30% or less, preferably 20% or less; therefore, it is equivalent to conventional ionomers in rubber elasticity and moldability and, as is clear from Examples described later, has good flexibility, mechanical strengths and abrasion resistance, is high particularly in tensile strength at break and is superior in mar resistance and gloss.

### [Ionomer composition]

The first embodiment of the ionomer of the present invention can be used as an ionomer composition by mixing with a polymer compound selected from a thermoplastic resin and a rubber both other than the particular, functional group-containing copolymer (the polymer compound is hereinafter referred to as "other polymer compound"), a softening agent, etc. There is no particular restriction as to the other polymer compound constituting the ionomer composition as long as it is other than the particular, functional group-containing copolymer, and various polymer compounds may be used. As specific examples of the other polymer compound, there can be mentioned polyethylene and maleic anhydride-grafted polymer thereof, polyisobutylene, ethylene-vinyl acetate copolymer, ethylene acrylate, ethylene acrylic acid copolymer, polypropylene and maleic anhydride-grafted polymer thereof, polyisobutylene, chlorinated polypropylene, 4-methylpentene-1 resin, polystyrene, ABS resin, AS resin, acrylic resin, methacrylic resin, vinyl chloride resin, vinylidene chloride resin, polyamide resin, polycarbonate, ethylene-α-olefin copolymer rubber and maleic anhydride-grafted polymer thereof, ethylene-α-olefin-non-conjugated diene copolymer rubber, styrene-butadiene rubber and hydrogenation product thereof, maleic anhydride-grafted polymer of hydrogenation product of styrene-butadiene rubber, butadiene rubber and hydrogenation product thereof, maleic anhydride-grafted polymer of hydrogenation product of butadiene rubber, isoprene rubber and hydrogenation product thereof, maleic anhydride-grafted polymer of hydrogenation product of isoprene rubber, styrene-isoprene rubber and hydrogenation product thereof, maleic anhydride-grafted polymer of hydrogenation product of styrene-isoprene rubber, nitrile rubber and hydrogenation product thereof, acrylic rubber, silicone rubber, fluororubber, butyl rubber and natural rubber. Polyethylene and polypropylene are preferred particularly. These polymer compounds can be used singly or in combination of two or more kinds. The proportion of the other polymer compound used is 300 parts by mass or less, preferably 1 to 200 parts by mass relative to 100 parts by mass of the particular, functional group-containing copolymer constituting the ionomer.

The softening agent constituting the ionomer composition may be added into the monomers solution for obtaining the particular, functional group-containing copolymer constituting the ionomer, or may be added in or after production of the ionomer. The softening agent constituting the ionomer composition is not particularly restricted as long as it is a softening agent for rubber, ordinarily used. As the softening agent, there can be mentioned, for example, mineral oil-based hydrocarbons of paraffinic type, naphthenic type or aromatic type and low-molecular hydrocarbons of polybutene type, polybutadiene type or the like. Of these, there are preferred mineral oil-based hydrocarbons having a molecular weight of 300 to 2,000, particularly 500 to 1,500 in terms of weight-average molecular weight. The softening agent for rubber, composed of a mineral oil-based hydrocarbon is generally a mixture of aromatic hydrocarbons, naphthenic hydrocarbons and paraffinic hydrocarbons; and it is classified as a paraffinic oil when the carbon atoms of paraffinic hydrocarbons are 50% or more of the total carbon atoms, as a naphthenic oil when the carbon atoms of naphthenic hydrocarbons are 30 to 45% of the total carbon atoms, and as an aromatic oil when the total atoms of aromatic hydrocarbons are 30% or more of the total carbon atoms. In the present invention, a paraffinic oil is preferred and a hydrogenated paraffinic oil is particularly preferred. Further, with respect to the mineral oil-based hydrocarbon, the kinematic viscosity at 40°C is preferably 20 to 80 cSt, particularly preferably 50 to 600 cSt and the pour point is preferably -40 to 0°C, particularly preferably -30 to 0°C. The proportion of the softening agent used is 100 parts by mass or less, preferably 1 to 67 parts by mass relative to 100 parts by mass of the particular, functional group-containing copolymer constituting the ionomer.

The ionomer composition may be prepared by mixing, into the ionomer, the other polymer compound and/or the softening agent; however, the following methods (4) and (5) can be mentioned as preferred methods for preparation.

(4) A method of mixing the particular, functional group-containing copolymer, the particular metal compound particles, the activating agent used as necessary, and the other polymer compound and/or the softening agent and subjecting the resulting mixture to a dynamic heat treatment.

The conditions of the dynamic heat treatment in the above method differ depending upon the melting point of the particular, functional group-containing copolymer, the kind of the particular metal compound particles, the melting point of the other polymer compound, the kind of the melting and kneading apparatus, etc.; however, the temperature of treatment is 80 to 350°C, preferably 100 to 300°C and the time of treatment is 20 seconds to 320 minutes, preferably 30 seconds to 25 minutes. The shear force applied to the mixture is 10 to 2,000 s⁻¹, preferably 100 to 1,000 s⁻¹ in terms of shear rate.

(5) A method of mixing, with heating, a solution of the particular, functional group-containing copolymer in an appropriate solvent, a solution or dispersion of the particular metal compound particles and the activating agent used as necessary, in an appropriate solvent, and a solution or dispersion of the polymer compound and/or the softening agent, and subjecting the resulting mixture to solvent removal.

The solvent used in this method is not particularly restricted; however, there can be used preferably, for example, aliphatic hydrocarbons, alicyclic hydrocarbons, aromatic hydrocarbons and halides thereof because the particular, functional group-containing copolymer is easily soluble therein. As specific examples of such solvents, there can be mentioned butane, pentane, hexane, heptane, 2-butane, 2-methyl-2-butane, cyclopentane, methylcyclopentane, cyclohexane, isooctane, benzene, toluene, xylene, chlorobenzene, dichloromethane and dichloroethane. When the solubility of the particular metal compound particles and activating agent used, in the above solvent is low, there may be prepared a dispersion wherein the particular metal compound particles and activating agent are dispersed in the solvent in a suspended state, or other solvent and/or an additive may be added in order to dissolve the particular metal compound particles and activating agent. When the solubility of the polymer compound and the softening agent in the above solvent is low, they may be dispersed in the solvent in a suspended state, or other solvent or additive may be added in order to dissolve the polymer compound and the softening agent, or it is possible to add, after solvent removal, the polymer compound and the softening agent and subject the resulting mixture to a dynamic heat treatment. The mixing of different solutions or of different solution(s) and different dispersion(s) can be conducted using a solution stirrer used ordinarily, and the temperature employed in the mixing is preferably 20°C or more, more preferably 30°C or more. Further, in the mixing, an appropriate catalyst may be added in order to accelerate a metal-crosslinking reaction. The resulting mixture is subjected to solvent removal by a well-known method such as heating, pressure reduction, steam distillation or the like, whereby an ionomer composition is obtained. Or, the mixture is cast on an appropriate substrate, followed by solvent removal, whereby an ionomer composition can be obtained as a film.

The ionomer composition may as necessary contain various additives such as lubricant, stabilizers such as antioxidant, heat stabilizer, weather resistant, metal deactivator, ultraviolet absorber, light stabilizer and copper harm inhibitor; bactericidal and fungicidal agent, dispersing agent, plasticizer, nucleating agent for crystallization, flame retardant, tackifier, foaming aid, coloring agents such as titanium oxide and carbon black, metal powder such as ferrite powder, inorganic fibers such as glass fiber and metal fiber; organic fibers such as carbon fiber and aramid fiber; composite fiber, inorganic whiskers (e.g. potassium titanate whiskers; fillers such as glass beads, glass balloon, glass flake, asbestos, mica, calcium carbonate, talc, silica, calcium silicate, hydrotalcite, kaolin, diatomaceous earth, graphite, pumice, ebonite powder, cotton flock, cork powder, barium sulfate, fluoroplastic and polymer beads and mixtures thereof; fillers such as polyolefin wax, cellulose powder, rubber powder and wood flour; and low-molecular polymer.

### [Molded article]

The first embodiment of the ionomer of the present invention, or the ionomer composition thereof can be easily processed by a molding method such as injection molding, extrusion molding, vacuum molding, powder slush molding, calender molding, transfer molding, solvent casting, press molding or the like, and can give a molded article (a molded article of the present invention) which has good rubber elasticity, is superior in flexibility and mechanical properties and is particularly superior in tensile strength at break, mar resistance and gloss. Such a molded article of the present invention can also be used by being bonded or laminated with an ordinary olefin-based vulcanized rubber molded article or with an ordinary ionomer molded article. Being superior in rubber elasticity, flexibility, moldability, mar resistance and abrasion resistance, the molded article of the present invention can be used in automotive applications such as bumper, mall as exterior trim, gasket for wind shielding, gasket for door shielding, gasket for trunk sealing, roof side rail, emblem, inner panel, door trim, skin material for inner or outer trim (e.g. console box), weather strip and the like; mar-resistant leather sheet; aircraft and ship applications such as sealing material, skin material for inner or outer trim, and the like; civil engineering and construction applications such as sealing material, skin material for inner or outer trim, water-proof sheet, and the like; general machinery and equipment applications such as sealing material and the like; light electric appliance applications such as packing, skin material, housing and the like; roll and cleaning blade for information appliances; film for electronic parts; sealing material; protective film for image (e.g. picture); decorative film for construction material; part for medical instruments; electric wire; ordinary processed products such as daily sundry, sporting goods and the like; CMP pad for semiconductor polishing; various films for electronic parts, such as protective film, impact-absorbing film, polarizing film, film for absorption of particular wavelength, and the like; and protective film used in production of flat panel display (FPD) for semiconductor apparatus, liquid crystal display apparatus, etc.

Next, description is made on the operation mode of the second embodiment of the ionomer of the present invention and the second embodiment of the process for producing an ionomer according to the present invention. The second embodiment of the ionomer of the present invention is obtained by the below-shown second embodiment of the process for producing an ionomer according to the present invention.

The second embodiment of the process for producing an ionomer according to the present invention comprises subjecting, to a dynamic heat treatment, a metal compound and an olefin-based random copolymer obtained by copolymerizing ethylene, an α-olefin having 3 to 10 carbon atoms and a functional cyclic compound represented by the following general formula (2).

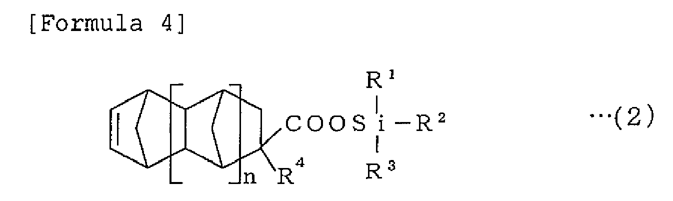

[in the general formula (2), n is 0 or 1; and R¹, R², R³ and R⁴ are each independently a hydrogen atom, a halogen atom or a mono-valent organic group].

### [Olefin-based random copolymer]

The olefin-based random copolymer used in the process for producing an ionomer according to the present operation mode uses ethylene as a monomer. The proportion of ethylene used is preferably 35 to 94.99 mole % of the total monomer components, more preferably 40 to 89.99 mol %, particularly preferably 45 to 84.99 mol %. When the proportion of ethylene used is less than 35 mol %, it may be difficult to copolymerize a functional cyclic compound which is described later. Meanwhile, when the proportion of ethylene used is more than 94.99 mol %, it may be difficult to obtain an ionomer of the present invention (an ionomer of the second embodiment) having rubber elasticity required for olefin-based thermoplastic elastomer.

The olefin-based random copolymer uses an α-olefin having 3 to 10 carbon atoms (this α-olefin may hereinafter be referred to as "particular α-olefin") as a monomer. Use of an α-olefin having 10 or less carbon atoms makes easier the copolymerizability between the α-olefin and other monomers. As specific examples of the particular α-olefin, there can be mentioned propylene, 1-butene, 1-pentene, 4-methyl-pentene-1, 1-hexene, 1-heptene, 1-octene, 1-decene, and the like. Of these, propylene, 1-butene, 1-hexene and 1-octene are preferred, and propylene and 1-butene are more preferred. These compounds can be used singly or in combination of two or more kinds.

The proportion of the particular α-olefin used is preferably 5 to 50 mol % of the total monomer components, more preferably 10 to 45 mol %, particularly preferably 15 to 40 mol %. When the proportion of the particular α-olefin used is less than 5 mol %, it may be difficult to obtain an ionomer of the present invention (an ionomer of the second embodiment) having rubber elasticity required for olefin-based thermoplastic elastomer. Meanwhile, when the proportion of the particular α-olefin used is more than 50 mol %, the resulting ionomer may be low in durability.

The olefin-based random copolymer uses a functional cyclic compound represented by the above mentioned general formula (2), as a monomer. In the general formula (2), R¹ to R³ are each independently a hydrogen atom, a halogen atom or a mono-valent organic group, preferably a hydrogen atom or a hydrocarbon group having 1 to 20 carbon atoms. As specific examples of the hydrocarbon group having 1 to 20 carbon atoms, there can be mentioned aliphatic hydrocarbon groups such as methyl group, ethyl group, butyl group and the like; alicyclic hydrocarbon groups such as cyclohexyl group and the like; and aromatic hydrocarbon groups such as benzyl group and the like. It is particularly preferred that all of R¹ to R³ are ethyl group, or one of them is tert-butyl group and the other two are each methyl group. R⁴ is, independently from R¹ to R³, a hydrogen atom, a halogen atom or a mono-valent organic group, preferably a hydrocarbon group having 1 to 20 carbon atoms, more preferably a methyl group among the above mentioned groups. The number of repetition n is 0 or 1, preferably 1.

As specific examples of the functional cyclic compound, the following compounds can be mentioned.
2-Methylbicyclo[2.2.1]hept-5-ene-2-carboxylic acid trimethylsilyl
2-Methylbicyclo[2.2.1]hept-5-ene-2-carboxylic acid triethylsilyl
2-Methylbicyclo[2.2.1]hept-5-ene-2-carboxylic acid tert-butyldimethylsilyl
2-Methylbicyclo[2.2.1]hept-5-ene-2-carboxylic acid tri-n-butylsilyl
2-Methylbicyclo[2.2.1]hept-5-ene-2-carboxylic acid n-butyldimethylsilyl
2-Methylbicyclo[2.2.1]hept-5-ene-2-carboxylic acid cyclohexyldimethylsilyl
2-Methylbicyclo[2.2.1]hept-5-ene-2-carboxylic acid tribenzylsilyl
Bicyclo[2.2.1]hept-5-ene-2-carboxylic acid trimethylsilyl
Bicyclo[2.2.1]hept-5-ene-2-carboxylic acid triethylsilyl
Bicyclo[2.2.1]hept-5-ene-2-carboxylic acid tert-butyldimethylsilyl
Bicyclo[2.2.1]hept-5-ene-2-carboxylic acid tri-n-butylsilyl
Bicyclo[2.2.1]hept-5-ene-2-carboxylic acid n-butyldimethylsilyl
Bicyclo[2.2.1]hept-5-ene-2-carboxylic acid cyclohexyldimethylsilyl
Bicyclo[2.2.1]hept-5-ene-2-carboxylic acid tribenzylsilyl 2-Ethylbicyclo[2.2.1]hept-5-ene-2-carboxylic acid trimethylsilyl
2-Ethylbicyclo[2.2.7.]hept-5-ene-2-carboxylic acid triethylsilyl
2-Ethylbicyclo[2.2.1]hept-5-ene-2-carboxylic acid tert-butyldimethylsilyl
2-Ethylbicyclo[2.2.1]hept-5-ene-2-carboxylic acid tri-n-butylsilyl
2-Ethylbicyclo[2.2.1]hept-5-ene-2-carboxylic acid n-butyldimethylsilyl
2-Ethylbicyclo[2.2.1]hept-5-ene-2-carboxylic acid cyclohexyldimethylsilyl
2-Ethylbicyclo[2.2.1]hept-5-ene-2-carboxylic acid tribenzylsilyl
4-Methyltetracyclo [6.2.1.1^{3,6}.0^{2,7}] dodec-9-ene-4-carboxylic acid trimethylsilyl
4-Methyltetracyclo [6. 2 .1.1^{3,6}.0^{2,7}] dodec-9-ene-4-carboxylic acid triethylsilyl
4-Methyltetracyclo [6.2.1.1^{3,6}. 0^{2,7}]dodec-9-ene-4-carboxylic acid tert-butyldimethylsilyl
4-Methyltetracyclo [6.2.1.1^{3,6}.0^{2,7}] dodec-9-ene-4-carboxylac acid n-butyldimethylsilyl
4-Methyltetracyclo[6.2.1.1^{3,6}.0^{2,7}]dodec-9-ene-4-carboxylic acid cyclohexyldimethylsilyl
4-Methyltetracyclo [6.2. 1.1^{3,6}. 0^{2,7}] dodec-9-ene-4-carboxylic acid allyldichlorosilyl
4-Methyltetracyclo [6.2.1.1^{3,6}.0^{2,7}] dodec-9-ene-4-carboxylic acid diallylchlorosilyl
4-Methyltetracyclo [6.2.1.1^{3,6}.0^{2,7}] dodec-9-ene-4-carboxylic acid vinyldimethylsilyl
4-Methyltetracyclo [6.2.1.1^{3,6}. 0^{2,7}] dodec-9-ene-4-carboxylic acid chloromethyldimethylsilyl
4-Methyltetracyclo[6.2.1.1^{3,6}.0^{2,7}] dodec-9-ene-4-carboxylic acid tert-butylphenylchlorosilyl
4-Methyltetracyclo[6.2.1.1^{3,6}. 0^{2,7}] dodec-9-ene-4-carboxylic acid tribenzylsilyl
4-Methyltetracyclo[6.2.1.1^{3,6}.0^{2,7}] dodec-9-ene-4-carboxylic acid dimethylsilyl
Tetracyclo[6.2.1.1^{3,6}.0^{2,7}]dodec-9-ene-4-carboxylic acid trimethylsilyl
Tetracyclo [6.2.1.1^{3,6}.0^{2,7}] dodec-9-ene-4-carboxylic acid triethylsilyl
Tetracyclo [6.2.1.1^{3,6}.0^{2,7}] dodec- 9-ene-4-carboxylic acid tert-butyldimethylsilyl
Tetracyclo[6.2.1.1^{3,6}.0^{2,7}] dodec-9-ene-4-carboxylic acid n-butyldimethylsilyl
Tetracyclo [6.2.1.1^{3,6}.0^{2,7}] dodec-9-ene-4-carboxylic acid cyclohexyldimethylsilyl
Tetracyclo[6.2.1.1^{3,6}.0^{2,7}] dodec-9-ene-4-carboxylic acid allyldichlorosilyl
Tetracyclo [6.2.1.1^{3,6}.0^{2,7}] dodec-9-ene-4-carboxylic acid diallylchlorosilyl
Tetracyclo [6.2.1.1^{3,6}.0^{2,7}] dodec-9-ene-4-carboxylic acid vinyldimethylsilyl
Tetracyclo[6.2.1.1^{3,6}. 0^{2,7}] dodec-9-ene-4-carboxylic acid chloromethyldimethylsilyl
Tetracyclo[6.2.1.1^{3,6}.0^{2,7}]dodec-9-ene-4-carboxylic acid tert-butylphenylchlorosilyl
Tetracyclo [6.2.1,1^{3,6}. 0^{2,7}] dodec-9-ene-4-carboxylic acid tribenzylsilyl
Tetracyclo[6.2.1.1^{3,6}. 0^{2,7}] dodec- 9-ene-4-carboxylic acid dimethylsilyl
4-Ethyltetracyclo[6.2.1.1^{3,6}.0^{2,7}] dodec-9-ene-4-carboxylic acid trimethylsilyl
4-Ethyltetracyclo [6.2.1.1^{3,6}.0^{2,7}] dodec-9-ene-4-carboxylic acid tert-butyldimethylsilyl
4 -Chlorotetracyclo [6.2.1. 1^{3,6}.0^{2,7}] dodec-9-ene-4-carboxylic acid trimethylsilyl
4-Chlorotetracyclo[6.2.1.1^{3,6}. 0^{2,7}]dodec-9-ene-4-carboxylic acid tert-butyldimethylsilyl
4-Methoxytetracyclo[6.2.1.1^{3,6}.0^{2,7}]dodec-9-ene-4-carboxylic acid trimethylsilyl
4-Methoxytetracyclo [6.2.1.1^{3,6}. 0^{2,7}] dodec-9-ene-4-carboxylic acid tert-butyldimethylsilyl
These functional cyclic compounds can be used singly or in combination of two or more kinds.

Of these compounds, the following compounds are preferred from the standpoints of their polymerizability and the stability of ionomer obtained.
2-Methylbicyclo[2.2.1]hept-5-ene-2-carboxylic acid trimethylsilyl
2-Methylbicyclo[2.2.1]hept-5-ene-2-carboxylic acid triethylsilyl
2-Methylbicyclo [2.2.1] hept-5-ene-2-carboxylic acid tert-butyldimethylsilyl
2-Methylbicyclo[2.2.1]hept-5-ene-2-carboxylic acid tri-n-butylsilyl
2-Methylbicyclo[2.2.1]hept-5-ene-2-carboxylic acid n-butyldimethylsilyl
2-Methylbicyclo[2.2.1]hept-5-ene-2-carboxylic acid cyclohexyldimethylsilyl
2-Methylbicyclo[2.2.1]hept-5-ene-2-carboxylic acid tribenzylsilyl
4-Methyltetracyclo[6.2.1.1^{3,6}.0^{2,7}] dodec-9-ene-4-carboxylic acid trimethylsilyl
4-Methyltetracyclo[6.2.1.1^{3,6}.0^{2,7}] dodec-9-ene-4 -carboxylic acid triethylsilyl
4-Methyltetracyclo [6.2.1.1^{3,6}.0^{2,7}] dodec-9-ene-4-carboxylic acid tert-butyldimethylsilyl
4-Methyltetracyclo [6.2.1.1^{3,6}. 0^{2,7}] dodec-9-ene-4 -carboxylic acid n-butyldimethylsilyl
4-Methyltetracyclo [6.2.1.1^{3,6}.0^{2,7}] dodec-9-ene-4-carboxylic acid cyclohexyldimethylsilyl
4-Methyltetracyclo [6.2.1.1^{3,6}.0^{2,7}] dodec-9-ene-4-carboxylic acid tribenzylsilyl
The following compounds are particularly preferred.
4-Methyltetracyclo [6.2.1.1^{3,6}.0^{2,7}] dodec-9-ene-4-carboxylic acid trimethylsilyl
4-Methyltetracyclo[6.2.1.1^{3,6}.0^{2,7}]dodec-9-ene-4-carboxylic acid triethylsilyl
4 -Methyltetracyclo [6.2.1.1^{3,6}.0^{2,7}] dodec-9-ene-4-carboxylic acid tert-butyldimethylsilyl
4-Methyltetracyclo[6.2.1.1^{3,6}.0^{2,7}]dodec-9-ene-4-carboxylic acid n-butyldimethylsilyl
4-Methyltetracyclo [6.2.1.1^{3,6}. 0^{2,7}] dodec-9-ene-4-carboxylic acid cyclohexyldimethylsilyl

The functional cyclic compound is a compound obtained by the silylation of the carboxyl group of a cyclic compound having carboxyl group; therefore, production of functional group-containing, olefin-based random copolymer is possible without masking or demasking and production of ionomer is possible with no change of the functional group of the functional group-containing, olefin-based random copolymer obtained.

The proportion of the functional cyclic compound used is preferably 0.01 to 5 mol % of the total monomers, more preferably 0.01 to 4 mol %. When the proportion of the functional cyclic compound used is less than 0.01 mol %, the resulting ionomer has a low crosslink density and tends to be low in mechanical strengths and heat resistance. Meanwhile, when the proportion of the functional cyclic compound used is more than 5 mol %, the resulting ionomer has a high crosslink density and tends to be high in hardness and be brittle.

In the olefin-based random copolymer, there may be used, besides the above-mentioned monomers, a non-conjugated diene as an optional monomer. As specific examples of the non-conjugated diene, there can be mentioned straight chain acyclic dienes such as 1,4-hexadiene, 1,6-hexadiene, 1,5-hexadiene and the like; branched chain acyclic dienes such as 5-methyl-1,4-hexadiene, 3,7-dimethyl-1,6-octadiene, 5,7-dimethylocta-1,6-diene, 3,7-dimethyl-1,7-octadiene, 7-methylocta-1,6-diene, dihydromyrcene and the like; and alicyclic dienes such as tetrahydroindene, methyltetrahydroindene, dicyclopentadiene, bicyclo[2.2.1]-hepta-2,5-diene, 5-methylene-2-norbrnene, 5-ethylidene-2-norbornene, 5-propenyl-2-norbornene, 5-isopropylidene-2-norbornene, 5-cyclohexylidene-2-norbornene, 5-vinyl-2-norbornene and the like. These compounds may be used singly or in combination of two or more kinds. Of the above-mentioned non-conjugated dienes, preferred are 1,4-hexadiene, dicyclopentadiene, 5-ethylidene-2-norbornene, etc. The proportion of the non-conjugated diene used is preferably 0 to 10 mol % of the total monomer components. When the proportion of the non-conjugated diene used is more than 10 mol %, the resulting ionomer may be low in durability.

The olefin-based random copolymer used in the process for producing an ionomer according to the present operation mode can be obtained by subjecting the above-mentioned ethylene, α-olefin having 3 to 10 carbon atoms and functional cyclic compound represented by the general formula (2), to addition polymerization. The addition polymerization is preferably conducted by feeding, into a reactor in an inert atmosphere such as nitrogen or argon atmosphere, ethylene, an α-olefin having 3 to 10 carbon atoms, a functional cyclic compound and a conjugated diene used as necessary and conducting a reaction in the presence of an appropriate solvent or diluent at a system temperature of 0 to 150°C. The system temperature is more preferably 10 to 100°C.

As a catalyst for addition polymerization, there is preferably used a catalyst for olefin-based copolymerization, capable of giving, in the copolymerization of a functional cyclic compound, an α-olefin and a non-conjugated polyene used as necessary, a copolymer wherein the structural units derived from the individual monomers are aligned with slight randomness. As such a catalyst for olefin-based copolymerization, there is preferably used a catalyst system comprising a transition metal compound, preferably a compound of a metal selected from group IV and group V of periodic table and an organoaluminum compound. As specific catalyst systems, the followings can be mentioned.

(1) A catalyst system comprising a hydrocarbon-soluble vanadium compound and an organoaluminum compound, wherein either or both of the vanadium compound and the organoaluminum compound contain at least one chlorine atom. As the vanadium compound, there can be used, for example, a compound represented by the following general formula (3-1), VCl₄, VO(acac)₂, V(acac)₃ ("acac" indicates acetylacetonate group) and a compound represented by the following general formula (3-2).

O=VClₖ (OR¹¹) ₃₋ₖ (3-1)

(wherein R¹¹ is a hydrocarbon group such as ethyl group, propyl group, butyl group, hexyl group or the like; and k is an integer of 0 to 3).

VCl₃·mZ (3-2)

(wherein Z is a Lewis base capable of forming a complex soluble in hydrocarbon compounds such as tetrahydrofuran, 2-methyl-tetrahydrofuran, 2-methoxymethyl-tetrahydrofuran, dimethylpyridine and the like; and m is an integer of 2 to 3).

As the organoaluminum compound, there can be used, for example, a trialkylaluminum compound represented by the following general formula (3-3), an alkylaluminum hydride represented by the following general formula (3-4) or the following general formula (3-5), an alkylaluminum chloride represented by the following general formula (3-6), the following general formula (3-7) or the following general formula (3-8), an alkoxy- or phenoxy-substituted organoaluminum represented by the following general formula (3-9) or the following general formula (3-10), and methylalumoxane (MAO), ethylalumoxane or butylalumoxane, obtained by a reaction between water and the above-mentioned trialkylaluminum compound.

AlR¹²₃ (3-3)

HAlR¹²₂ (3-4)

H₂AlR¹² (3-5)

R¹²AlCl₂ (3-6)

R¹²₃Al₂Cl₃ (3-7)

R¹²₂AlCl (3-8)

R¹²₂Al(OR¹³) (3-9)

R¹²Al(OR¹³)₂ (3-10)

[in the general formula (3-3) to the general formula (3-10), R¹² is a hydrocarbon group such as methyl group, ethyl group, propyl group, butyl group, hexyl group or the like; and R¹³ is methyl group, ethyl group, propyl group, butyl group, octyl group, phenyl group, tolylxylyl group, 2,6-di-tert-butylphenyl group, 4-methyl-2,6-di-tert-butylphenyl group, 2, 6-dimethylphenyl group or 4-methyl-2,6-dimethylphenyl group].

The above catalyst system may further contain, besides the vanadium compound and the organoaluminum compound, a oxygen- or nitrogen-containing electron donor such as organic acid or inorganic acid ester, ether, amine, ketone, alkoxysilane or the like.

(2) A catalyst system comprising a titanium or zirconium halide loaded on a carrier composed of silica or magnesium chloride, and an organoaluminum compound. As the titanium or zirconium halide, there can be used titanium tetrachloride, titanium tetrabromide, zirconium tetrachloride, etc. As the organoaluminum compound, there can be used trimethylaluminum, triethylaluminum, triisobutylaluminum, methylalumoxane, etc. This catalyst system may further contain dioctyl phthalate, tetraalkoxysilane, diphenylmethoxysilane or the like.

(3) A catalyst system comprising a transition metal compound of a metal selected from titanium, zirconium and hafnium, having, as a ligand, one or two cyclopentadienyl groups or indenyl groups all having a substituent group selected from hydrogen, alkyl group and allyl group, and an organoaluminum compound containing at least 50 mol % of methylalumoxane.

As specific examples of the transition metal compound, there can be mentioned bis(cyclopentadienyl)dimethylzirconium, bis(cyclopentadienyl)diethylzirconium, bis(cyclopentadienyl)methylzirconium monochloride, ethylenebis(cyclopentadienyl)zirconium dichloride, ethylenebis(cyclopentadienyl)methylzirconium monochloride, methylenebis(cyclopentadienyl)zirconium dichloride, ethylenebis(indenyl)zirconium dichloride, ethylenebis(indenyl)dimethylzirconium, ethylenebis(indenyl)diphenylzarconium, ethylenebis(4,5,6,7-tetrahydro-1-indenyl)dimethylzirconium, ethylenebis(4-methyl-2-indenyl)zirconium dichloride, ethylenebis(2,3-dimethyl-1-indenyl)zirconium dichloride, dimethylsilylbis(cyclopentadienyl)zirconium dichloride, dimethylsilylbis(indenyl)zirconium dichloride, dimethylsilylbis(dimethylcyclopentadienyl)zirconium dichloride, dimethylmethyl(fluorenyl)(cyclopentadienyl)zirconiurn dichloride, diphenylmethyl(fluorenyl)(cyclopentadienyl)zirconium dichloride, diphenylsilylbis(indenyl)zirconium dichloride, dimethylsilylbis(2-methyl-4-phenyl-indenyl)zirconium dichloride, bis(cyclopentadienyl)dimethyltitanzum, bis(cyclopentadienyl)methyltitanium monochloride, ethylenebis(indenyl)titanium dichloride, ethylenebis(4,5,6,7-tetrahydro-1-indenyl)titanium dichloride, methylenebis(cyclopentadienyl)titanium dichloride, η1: η5-{[(tert-butyl-amide)dimethylsilyl](2,3,4,5-tetramethyl-1-cyclopentadienyl)}titanium dichloride, and the like.

(4) A catalyst system comprising methylalumoxane (MOA) and a complex of a transition metal (of periodic table group IV), containing, as a ligand, a bisalkyl-substituted or N-alkylsubstituted salicyladoimine.

As the solvent or diluent used in the addition polymerization, there can be used, for example, aliphatic hydrocarbons, alicyclic hydrocarbons, aromatic hydrocarbons and halides thereof. Specifically, there can be mentioned butane, heptane, hexane, heptane, 2-butene, 2-methyl-2-heptene, cyclopentane, methylcyclopentane, cyclohexane, isooctane, benzene, toluene, xylene, chlorobenzene, dichloromethane, dichloroethane, etc. These solvents or diluents are used preferably in a state where the water content has been reduced to 20 ppm or less by distillation or adsorption.

In such addition polymerization, the molecular weight control of the particular addition copolymer obtained can be conducted by the addition of molecular weight modifier, the adjustment of the addition amount of polymerization catalyst, the control of polymerization temperature, the adjustment of addition amount to polymer, etc. As the molecular weight modifier, there can be used hydrogen, diethyl zinc, diisobutylaluminum hydride, etc. The reactor for conducting addition polymerization may be a batch type or a continuous type. As the continuous type reactor, there can be used a tubular reactor, a tower reactor, a tank reactor, etc.

The olefin-based random copolymer is obtained by blowing steam into the polymer solution after addition polymerization to remove the solvent, separating a solid from the slurry obtained, and dehydrating and drying the solid using a screw type squeezer, an extruder, a heating roll or the like. Or, the polymerization solution is heated for concentration, and the concentrate obtained is dried using a vented extruder, to obtain an olefin-based random copolymer. As necessary, the polymerization solution may be subjected to separation and removal of polymerization catalyst residue. Such separation and removal may be conducted using a method of passing the polymerization solution through an absorption column filled with silica, alumina, diatomaceous earth or the like, or a method of adding a large amount of water, an alcohol or the like to the polymerization solution to conduct washing.

The thus-obtained, olefin-based random copolymer has a polystyrene-reduced weight-average molecular weight as measured by gel permeation chromatography using o-dichlorobenzene as a solvent, of preferably 1,000 to 3,000,000, more preferably 3,000 to 1,000,000, particularly preferably 5,000 to 700,000. The glass transition temperature of the olefin-based random copolymer is preferably -90 to 50°C, particularly preferably -70 to 10°C, whereby can be obtained an ionomer having sufficient elasticity. The glass transition temperature can be measured using a differential scanning colorimeter (DSC).

The olefin-based random copolymer may contain various additives such as anti-oxidant, ultraviolet absorber and the like.

As the anti-oxidant, there can be used phenol or hydroquinone type anti-oxidants such as 2,6-di-tert-butyl-4-methylphenol, 4,4'-thiobis-(6-tert-butyl-3-methylphenol), 1,1'-bis(4-hydroxyphenyl)cyclohexane, 2,2'-methylenebis(4-ethyl-6-tert-butylphenol), 2,5-di-tert-butylhydroquinone, pentaerythrityl tetrakis[3-(3,5-di-tert-butyl-4-hydroxyphenyl)propionate], triethylene glycol bis[3-(3-tert-butyl-5-methyl-4-hydroxyphenyl)propionate], 1,6-hexanediol bis[3-(3,5-di-tert-butyl-4-hydroxyphenyl)propionate], 2,4-bis(n-octylthio)-6-(4-hydroxy-3,5-di-tert-butylanilino)-1,3,5-triazine, pentaerythrityl tetrakis [3-(3, 5-di-tert-butyl-4-hydroxyphenyl)propionate], 2,2-thio-diethylenebis[3-(3,5-di-tert-butyl-4-hydroxyphenyl)propionate], octadecyl-3-(3,5-di-tert-butyl-4-hydroxyphenyl)propionate, N,N'-hexamethylenebis(3,5-di-tert-butyl-4-hydroxy-hydrocinnamamide, 3,5-tert-butyl-4-hydroxy-4-benzylphosphate-diethyl ester, 1,3,5-trimethyl-2,4,6-tris(3,5-di-tert-butyl-4-hydroxybenzyl)benzene and the like; and phosphorus-based anti-oxidants such as tris(4-methoxy-3,5-diphenyl) phosphite, tris(nonylphenyl) phosphite, tris(2,4-di-tert-butylphenyl) phosphite and the like. Use of these anti-oxidants in one kind or in combination of two or more kinds can give an olefin-based random copolymer of higher oxidation stability.

As the ultraviolet absorber, there can be used 2,4-dihydroxybenzophenone, 2-hydroxy-4-methoxybenzophenone, 2,2-methylenebis[4-(1,1,3,3-tetramethylbutyl)-6-[(2H-benzotriazol-2-yl)phenol]], hindered amine type ultraviolet absorbers, and benzoate type ultraviolet absorbers. Use of these ultraviolet absorbers in one kind or in combination of two or more kinds can give an olefin-based random copolymer of higher durability.

A lubricant may be added as other additive. Use of the lubricant can give an olefin-based random copolymer of higher processability.

In the second embodiment of the process for producing an ionomer according to the present invention, the above-obtained olefin-based random copolymer is mixed with a metal compound and the mixture is subjected to a dynamic heat treatment, whereby can be obtained an ionomer of the second embodiment.

### [Metal compound]

As the metal compound, there can be used a metal oxide, a metal hydroxide, a metal salt, a metal complex or the like. As specific examples of the metal oxides, there can be mentioned CuO, MgO, BaO, ZnO, Al₂O₃, Fe₂O₃, SnO, CaO and TiO₂. As specific examples of the metal hydroxide, there can be mentioned LiOH, NaOH, KOH, Cu(OH)₂, Cu₂O(OH)₂, Mg(OH)₂, Mg₂O(OH)₂, Ba(OH)₂, Zn(OH)₂, Sn(OH)₂, Ca(OH)₂, etc. These metal compounds may be treated with a silane coupling agent or a higher fatty acid in order to increase the dispersibility in the olefin-based random copolymer. These metal compounds can be used singly or in combination of two or more kinds.

The proportion of the metal compound used is ordinarily 0.01 to 10 parts by mass, preferably 0.05 to 9 parts by mass, particularly preferably 0.1 to 8 parts by mass relative to 100 parts by mass of the olefin-based random copolymer. When the proportion is less than 0.01 part by mass, the resulting ionomer is low in crosslink density and tends to be low in mechanical strengths and mar resistance. Meanwhile, when the proportion is more than 10 parts by mass, the resulting ionomer has a high crosslink density and tends to be too high in hardness and be brittle.

The metal compound is mixed with the olefin-based random copolymer and the mixture is subjected to a dynamic heat treatment, whereby a metal ion is generated and crosslinks the olefin-based random copolymer. As the metal ion for crosslinking the olefin-based random copolymer, there can be mentioned ions of metals of groups I to VIII of periodic table, such as lithium, potassium, sodium, aluminum, magnesium, calcium, barium, cesium, strontium, rubidium, titanium, zinc, copper, iron, tin, lead and the like. Of these, preferred are ions of potassium, sodium, aluminum, magnesium, barium, zinc, iron, calcium, titanium and lead. Therefore, the metal compound is not restricted to the above specific examples as long as they can generate such metal ions.

In the ionomer of the present operation mode, there can be used, besides the metal compound, a metal salt of carboxylic acid as an activating agent, in order to increase the miscibility of the metal compound with the olefin-based random copolymer and also increase the heat resistance of the ionomer obtained. As the metal salt of carboxylic acid, a metal salt of mono-valent carboxylic acid is preferred and the carboxylic acid is preferred to have 3 to 23 carbon atoms. As specific examples of such a carboxylic acid, there can be mentioned propionic acid, acrylic acid, butyric acid, methacrylic acid, valeric acid, hexanoic acid, octanoic acid, 2-ethylhexanoic acid, decanoic acid, palmitic acid, myristic acid, lauric acid, stearic acid, oleic acid, behenic acid, naphthenic acid, benzoic acid, and the like. As the metal component of the metal salt used as an activating agent, there can be appropriately selected from the above-mentioned metals of the metal ions which crosslink the olefin-based random copolymer. The metal component of the metal salt is preferably the same as the metal of the above-mentioned metal compound.

The proportion of the metal salt used as an activating agent is ordinarily 0.3 to 20 parts by mass, preferably 1 to 15 parts by mass relative to 100 parts by mass of the olefin-based random copolymer. When the proportion is less than 0.3 part by mass, the effect obtained by using the activating agent is not exhibited sufficiently. Meanwhile, when the proportion is more than 20 arts by mass, the resulting ionomer may be low in oil resistance and mechanical strengths.

### [Ionomer]

For mixing the metal compound, the olefin-based random copolymer and the activating agent used as necessary, there can be used various methods, for example, a method of preparing solutions or dispersions of the individual components and mixing these solutions or dispersions and a method of using a melting and kneading apparatus used ordinarily. However, a method of mixing with heating is preferred because an ionomer having stable properties can be obtained therewith. Specifically, the following method (I) is preferred.

(I) A method of mixing an olefin-based random copolymer, a metal compound and an activating agent used as necessary and subjecting the resulting mixture to a dynamic heat treatment.

In the above method (I), the "dynamic heat treatment" refers to both of a treatment of applying a shear force and a treatment of applying a heat. Such a dynamic heat treatment can be conducted, for example, by using a melting and kneading apparatus. This melting and kneading apparatus may be a batch type or a continuous type. As specific examples of the melting and kneading apparatus, there can be mentioned batch type melting and kneading apparatuses such as open type mixing roll, closed type Banbury mixer, kneader and the like; and continuous melting and kneading apparatuses such as single screw extruder, continuous double screw extruder of co-rotating type, continuous double screw extruder of counter-rotating type, and the like. As specific methods of the method (I), there can be mentioned the following methods (I-1) and (I-2).

(I-1) A method of mixing an olefin-based random copolymer, a metal compound and an activating agent used as necessary and passing the resulting mixture through a double screw extruder to give rise to continuous shear and heat generation and thereby conduct a dynamic heat treatment, to obtain an ionomer of the present operation mode.
(1-2) A method of mixing an olefin-based random copolymer, a metal compound and an activating agent used as necessary and feeding the resulting mixture into a batch type kneader to give rise to shear and heat generation and thereby conduct a dynamic heat treatment, to obtain an ionomer of the present operation mode.

The conditions of the dynamic heat treatment differ depending upon the melting point of the olefin-based random copolymer, the kind of the metal compound, the kind of the melting and kneading apparatus, etc. However, the treatment temperature is preferably 120 to 350°C, more preferably 150 to 290°C, the treatment time is preferably 20 seconds to 320 minutes, more preferably 30 seconds to 25 minutes, and the shear force applied to the mixture is preferably 10 to 2,000/sec, more preferably 100 to 1,000/sec in terms of shear rate.

The thus-obtained second embodiment of the ionomer of the present invention, obtained by the second embodiment of the process for producing an ionomer of the present invention has a melt flow rate (MFR) of preferably 0.5 g/10 min or more, more preferably 1 g/10 min or more as measured at 230°C under a load of 10 kg, and an elongation set of preferably 30% or less, more preferably 20% or less; therefore, it is equivalent to conventional olefin-based thermoplastic elastomers in rubber elasticity and moldability and has good flexibility, mechanical strengths and abrasion resistance, and is superior particularly in mar resistance.

The ionomer of the present operation mode can be produced also by the following methods (II), in addition to the above method (I).

(II) A method of mixing, with heating, a solution of an olefin-based random copolymer in an appropriate solvent and a solution or dispersion of a metal compound and an activating agent used as necessary, in an appropriate solvent, and thereafter subjecting the resulting mixture to solvent removal.

The solvent used in the method (II) is not particularly restricted; however, there can be used preferably, for example, aliphatic hydrocarbons, alicyclic hydrocarbons, aromatic hydrocarbons and halides thereof because the olefin-based random copolymer is easily soluble therein. As specific examples of such solvents, there can be mentioned butane, pentane, hexane, heptane, 2-butane, 2-methyl-2-butane, cyclopentane, methylcyclopentane, cyclohexane, isooctane, benzene, toluene, xylene, chlorobenzene, dichloromethane and dichloroethane. When the solubility of the metal compound and activating agent used, in the above solvent is low, there may be prepared a dispersion wherein the metal compound and activating agent are dispersed in the solvent in a suspended state, or other solvent and/or an additive may be added in order to dissolve the metal compound and activating agent. The proportion of the olefin-based random copolymer in the solution is preferably 0.1 to 60% by mass, more preferably 0.2 to 50% by mass. The proportion of the total of the metal compound and activating agent in the solution or dispersion is preferably 0.01 to 60% by mass, more preferably 0.05 to 50% by mass. The mixing of the solution of the olefin-based random copolymer with the solution or dispersion of the metal compound and activating agent can be conducted using a solution stirrer used ordinarily, and the temperature employed in the mixing is preferably 20°C or more, more preferably 30°C or more. Further, in the mixing, an appropriate catalyst may be added in order to accelerate a metal-crosslinking reaction. The resulting mixture is subjected to solvent removal by a well-known method such as heating, pressure reduction, steam distillation or the like, whereby an ionomer of the present operation mode is obtained. Or, the mixture is cast on an appropriate substrate, followed by solvent removal, whereby an ionomer of the present operation mode can be obtained as a film.

### [Ionomer composition]

Next, description is made on the operation mode of the process for producing an ionomer composition of the present invention. The ionomer composition of the present operation mode can be obtained by mixing the second embodiment of the ionomer of the present invention with a polymer compound selected from a thermoplastic resin and a rubber (the polymer compound may be hereinafter referred to as "particular polymer compound"). The thermoplastic resin or rubber used as the particular polymer compound is not particularly restricted as long as it is other substance than the olefin-based random copolymer, and various polymers can be used. As specific examples thereof, there can be mentioned polyethylene and maleic anhydride-grafted polymer thereof, polyisobutylene, ethylene-vinyl acetate copolymer, ethylene acrylate, ethylene acrylic acid copolymer, polypropylene and maleic anhydride-grafted polymer thereof, polyisobutylene, chlorinated polypropylene, 4-methylpentene-1 resin, polystyrene, ABS resin, AS resin, acrylic resin, methacrylic resin, vinyl chloride resin, vinylidene chloride resin, polyamide resin, polycarbonate, ethylene-α-olefin copolymer rubber and maleic anhydride-grafted polymer thereof, ethylene-α-olefin-non-conjugated diene copolymer rubber, styrene-butadiene rubber and hydrogenation product thereof, maleic anhydride-grafted polymer of hydrogenation product of styrene-butadiene rubber, butadiene rubber and hydrogenation product thereof, maleic anhydride-grafted polymer of hydrogenation product of butadiene rubber, isoprene rubber and hydrogenation product thereof, maleic anhydride-grafted polymer of hydrogenation product of isoprene rubber, styrene-isoprene rubber and hydrogenation product thereof, maleic anhydride-grafted polymer of hydrogenation product of styrene-isoprene rubber, nitrile rubber and hydrogenation product thereof, acrylic rubber, silicone rubber, fluororubber, butyl rubber and natural rubber. Polyethylene and polypropylene are preferred particularly. These polymer compounds can be used as the particular polymer compound singly or in combination of two or more kinds. The proportion of the particular polymer compound used is 300 parts by mass or less, preferably 1 to 200 parts by mass relative to 100 parts by mass of the olefin-based random copolymer constituting the ionomer.

The ionomer composition can be obtained also by adding a particular softening agent to the second embodiment of the ionomer of the present invention. The particular softening agent may be added into the monomers solution for obtaining the olefin-based random copolymer constituting the ionomer, or may be added in or after production of the ionomer. The particular softening agent is not particularly restricted as long as it is a softening agent for rubber, ordinarily used. As the softening agent, there can be mentioned, for example, mineral oil-based hydrocarbons of paraffinic type, naphthenic type or aromatic type and low-molecular hydrocarbons of polybutene type, polybutadiene type or the like. Of these, there are preferred mineral oil-based hydrocarbons having a molecular weight of 300 to 2,000, particularly 500 to 1,500 in terms of weight-average molecular weight. The softening agent for rubber, composed of a mineral oil-based hydrocarbon is generally a mixture of aromatic hydrocarbons, naphthenic hydrocarbons and paraffinic hydrocarbons; and it is classified as a paraffinic oil when the carbon atoms of paraffinic hydrocarbons are 50% or more of the total carbon atoms, as a naphthenic oil when the carbon atoms of naphthenic hydrocarbons are 30 to 45% of the total carbon atoms, and as an aromatic oil when the total atoms of aromatic hydrocarbons are 30% or more of the total carbon atoms. In the present invention, a paraffinic oil is preferred and a hydrogenated paraffinic oil is particularly preferred. Further, with respect to the mineral oil-based hydrocarbon, the kinematic viscosity at 40°C is preferably 20 to 80 cSt, particularly preferably 50 to 600 cSt and the pour point is preferably -40 to 0°C, particularly preferably -30 to 0°C. The proportion of the particular softening agent used is 100 parts by mass or less, preferably 1 to 67 parts by mass relative to 100 parts by mass of the olefin-based random copolymer constituting the ionomer.

The ionomer composition of the present invention may be produced also by adding the particular polymer compound and/or the particular softening agent to the second embodiment of the above ionomer and mixing them with heating. The production is conducted particularly preferably by the following method (III).

(III) A method of mixing an olefin-based random copolymer, a metal compound, an activating agent used as necessary, and a particular polymer compound and/or a particular softening agent and subjecting the resulting mixture to a dynamic heat treatment.

The conditions of the dynamic heat treatment in the method (III) differ depending upon the melting point of the olefin-based random copolymer, the kind of the metal compound, the melting point of the particular polymer compound, the kind of the melting and kneading apparatus, etc.; however, the temperature of treatment is preferably 120 to 350°C, more preferably 150 to 290°C and the time of treatment is preferably 20 seconds to 320 minutes, more preferably 30 seconds to 25 minutes. The shear force applied to the mixture is 10 to 2,000/s, more preferably 100 to 1,000/s in terms of shear rate.

The ionomer composition of the present invention obtained thus by the process for production thereof has a melt flow rate (MFR) of preferably 0.5 g/10 min or more, more preferably 1 g/10 min or more as measured at 230°C under a load of 10 kg, an elongation set of preferably 30% or less, more preferably 20% or less, and a durometer A hardness of preferably 96 or less, more preferably 90 or less; therefore, the ionomer composition of the present invention obtained by the process for production thereof is equivalent to conventional olefin-based thermoplastic elastomer compositions in rubber elasticity, flexibility and moldability, has good mechanical strengths and abrasion resistance, and is superior particularly in mar resistance and gloss.

The ionomer composition can be produced also by the following method (IV), in addition to the above-mentioned method (III).

(IV) A method of mixing, with heating, a solution of the olefin-based random copolymer in an appropriate solvent, a solution or dispersion of the metal compound and the activating agent used as necessary, in an appropriate solvent, and a solution or dispersion of the particular polymer compound and/or the particular softening agent, and subjecting the resulting mixture to solvent removal.

The solvent used in the method (IV) is not particularly restricted; however, there can be used preferably, for example, aliphatic hydrocarbons, alicyclic hydrocarbons, aromatic hydrocarbons and halogenation products thereof because the olefin-based random copolymer is easily soluble therein. As specific examples of such solvents, there can be mentioned butane, pentane, hexane, heptane, 2-butane, 2-methyl-2-butane, cyclopentane, methylcyclopentane, cyclohexane, isooctane, benzene, toluene, xylene, chlorobenzene, dichloromethane and dichloroethane. When the solubility of the metal compound and activating agent used, in the above solvent is low, there may be prepared a dispersion wherein the metal compound and activating agent are dispersed in the solvent in a suspended state, or other solvent and/or an additive may be added in order to dissolve the metal compound and activating agent. When the solubility of the polymer compound and the softening agent in the above solvent is low, they may be dispersed in the solvent in a suspended state, or other solvent or additive may be added in order to dissolve the particular polymer compound and the particular softening agent, or it is possible to add, after solvent removal, the particular polymer compound and the particular softening agent and subject the resulting mixture to a dynamic heat treatment. The mixing of different solutions or of different solution(s) and different dispersion(s) can be conducted using a solution stirrer used ordinarily, and the temperature employed in the mixing is preferably 20°C or more, more preferably 30°C or more. Further, in the mixing, an appropriate catalyst may be added in order to accelerate a metal-crosslinking reaction. The resulting mixture is subjected to solvent removal by a well-known method such as heating, pressure reduction, steam distillation or the like, whereby an ionomer composition of the present invention is obtained. Or, the mixture is cast on an appropriate substrate, followed by solvent removal, whereby an ionomer composition of the present invention can be obtained as a film.

The ionomer composition of the present invention may as necessary contain various additives such as lubricant, stabilizers such as antioxidant, heat stabilizer, weather resistant, metal deactivator, ultraviolet absorber, light stabilizer and copper harm inhibitor), germicidal and mildewcidal agent, dispersing agent, plasticizer, nucleating agent for crystallization, flame retardant, tackifier, foaming aid, coloring agents (e.g. titanium oxide and carbon black), metal (e.g. ferrite) powder, inorganic fibers (e.g. glass fiber and metal fiber), organic fibers (e.g. carbon fiber and aramid fiber), composite fiber, inorganic whiskers (e.g. potassium titanate whiskers), fillers (e.g. glass beads, glass balloon, glass flake, asbestos, mica, calcium carbonate, talc, silica, calcium silicate, hydrotalcite, kaolin, diatomaceous earth, graphite, pumice, ebonite powder, cotton flock, cork powder, barium sulfate, fluoroplastic and polymer beads) and mixtures thereof, fillers (e.g. polyolefin wax, cellulose powder, rubber powder and wood flour), and low-molecular polymer.

In the second embodiment of the ionomer of the present invention and the composition thereof, the olefin-based random copolymer is crosslinked by a metal ion. Therefore, the ionomer and the composition can be easily processed by melt molding such as injection molding, extrusion molding, blow molding, compression molding, vacuum molding, laminate molding, calender molding or the like and can give an ionomer molded article superior in rubber elasticity, flexibility and mechanical properties. The molded article composed of the second embodiment of the ionomer of the present invention or the composition thereof can also be used by being bonded or laminated with an ordinary olefin-based vulcanized rubber molded article or with an ordinary olefin-based thermoplastic elastomer molded article. Being superior in rubber elasticity, flexibility, moldability and mar resistance, the second embodiment of the ionomer of the present invention and the composition thereof can be extensively used in applications wherein conventional olefin-based thermoplastic elastomers have been used. That is, automotive applications such as bumper, mall as exterior trim, gasket for wind shielding, gasket for door shielding, gasket for trunk sealing, roof side rail, emblem, inner panel, door trim, skin material for inner or outer trim (e.g. console box), weather strip and the like; mar-resistant leather sheet; aircraft and ship applications such as sealing material, skin material for inner or outer trim, and the like; civil engineering and construction applications such as sealing material, skin material for inner or outer trim, water-proof sheet, and the like; general machinery and equipment applications such as sealing material and the like; light electric appliance applications such as packing, skin material, housing and the like; roll and cleaning blade for information appliances; film for electronic parts; sealing material; protective film for image (e.g. picture); decorative film for construction material; part for medical instruments; electric wire; and ordinary processed products such as daily sundry, sporting goods and the like.

### Examples

Next, description is made on Examples for specifically carrying out the present invention. However, the present invention is in no way restricted thereto.

### [Examples for the first embodiment of the ionomer of the present invention]

The following various components were used in the following Examples and Comparative Examples.

### (Olefin-based random copolymers)

### (1) Particular, functional group-containing copolymer (A-1):

A particular, functional group-containing copolymer containing 73.7 mol % of a structural unit derived from ethylene, 24.6 mol % of a structural unit derived from propylene, 1.4 mol % of a structural unit derived from 5-ethylidene-2-norbornene and 0.3 mol % of a structural unit derived from 8-methyl-8-carboxy-tetracyclo [4.4.0.1^{2,5}.1^{7,10}]-3-dodecene, which has a weight-average molecular weight (Mw) of 15.6x10⁴.

### (2) Particular, functional group-containing copolymer (A-2):

A particular, functional group-containing copolymer containing 73.5 mol % of a structural unit derived from ethylene, 24.9 mol % of a structural unit derived from propylene, 1.4 mol % of a structural unit derived from 5-ethylidene-2-norbornene and 0.2 mol % of a structural unit derived from 8-methyl-8-carboxy-tetracyclo[4.4.0.1^{2,5}.1^{7,10}]-3-dodecene, which has a weight-average molecular weight (Mw) of 17.2x10⁴.

### (3) Particular, functional group-containing copolymer (A-3):

A particular, functional group-containing copolymer containing 73.3 mol % of a structural unit derived from ethylene, 25.2 mol % of a structural unit derived from propylene, 1.4 mol % of a structural unit derived from 5-ethylidene-2-norbornene and 0.1 mol % of a structural unit derived from 8-methyl-8-carboxy-tatracyclo[4.4.0.1^{2,5}.1^{7,10}]-3-dodecene, which has a weight-average molecular weight (Mw) of 17.4x10⁴.

### (Particular metal compound particles)

### (1) Metal compound particles (B-1) (for the present invention):

Magnesium hydroxide particles [Kisuma 5N (trade name) produced by Kyowa Chemical Industry Co., Ltd.] having an average particle diameter of 0.7 µm, which has been surface-treated with a higher fatty acid.

### (2) Metal compound particles (B-2) (for the present invention):

Zinc oxide particles [Zinc Oxide No. 1 (trade name) produced by Sakai Kagaku Kogyo Co.] having an average particle diameter of 0.7 µm.

### (3) Metal compound particles (B-3) (for the present invention):

Zinc oxide particles [Fine Zinc Oxide (trade name) produced by Sakai Kagaku Kogyo Co.] having an average particle diameter of 0.29 *µ*m.

### (4) Metal compound particles (B-4) (for the present invention):

Zinc oxide particles [Zinc Oxide Nano-fine W-1 (trade name) produced by Sakai Kagaku Kogyo Co.] having an average particle diameter of 0.01 µm.

### (5) Metal compound particles (B-5) (for comparison):

Calcium hydroxide particles [Ultra-fine Calcium Hydroxide 50 (trade name) produced by Inoue Sekkai Kogyo Co.] having an average particle diameter of 6.1 µm.

### (Other polymer compounds)

### (1) Polymer compound (C-1):

A high-density polyethylene resin [Novatec HD HJ490 (trade name) produced by Nippon Polychem Co.] having an MFR (temperature: 190°C, load: 2.16 kg) of 20 kg/10 min.

### (2) Polymer compound (C-2):

A polypropylene resin [Novatec PP MA4 (trade name) produced by Nippon Polychem Co.] having an MFR (temperature: 230°C, load: 2.16 kg) of 5 kg/10 min.

### (3) Polymer compound (C-3):

A hydrogenated, diene copolymer [Dynaron 6200P (trade name) produced by JSR].

### (Other additives)

Activating agent (D-1): magnesium stearate
Activating agent (D-2): zinc stearate
Activating agent (D-3): calcium stearate
Antioxidant (E-1): 2-[1-(2-hydroxy-3,5-di-tert-pentylphenyl)ethyl]-4,6-di-tert-pentylphenyl acrylate [Sumilizer GS (trade name) produced by Sumitomo Chemical Co., Ltd.].

### (Example 1)

100 parts by mass of a particular, functional group-containing copolymer (A-1), 1 part by mass of metal compound particles (B-1), 4.5 parts by mass of an activating agent (D-1) and 0.2 part by mass of an antioxidant were each independently fed into a 10-liter dual arm pressure kneader (a product of Moriyama Co.) heated at 230°C, and were kneaded at 40 rpm for 20 minutes at a shear rate of 200 s⁻¹. Then, the molten, lumpy, kneaded material obtained was fed into a feeder ruder (a product of Moriyama Co.) set at 180°C and 40 rpm, to obtain a pelletized ionomer. The ionomer pellets obtained were press-molded using an electrically heated press molder (a product of Kansai Roll Co.) under the conditions of die temperature = 180°C, pressing and heating time = 10 minutes and pressing and cooling time = 5 minutes, to obtain a molded sheet of 12 cm x 12 cm x 0.2 cm.

The ionomer obtained and the particular, functional group-containing copolymer (A-1) used were each subjected to infrared spectrophotometry using a Fourier transform infrared spectrophotometer FT-720 produced by HORIBA, Ltd. As a result, it was confirmed that, in the ionomer, the peak of - COOH at 1,700 cm⁻¹ detected for the particular, functional group-containing copolymer (A-1) disappeared and a peak of - COOMg appeared at 1,500 to 1,600 cm⁻¹.

### (Evaluation of ionomer)

The ionomer obtained was measured for melt flow rate (MFR) as an index of fluidity, under the conditions of temperature = 230°C and load = 10 kg. The result is shown in Table 1.

The obtained molded sheet of ionomer was measured for durometer A hardness (as an index of flexibility), elongation set (as an index of rubber elasticity), tensile strength at break and tensile elongation at break (both as mechanical strengths), gloss, abrasion resistance and specific gravity, according to the following methods, and further was subjected to the following mar resistance test 1 and mar resistance test 2. The results are shown in Table 1.

(1) Hardness (durometer A hardness): Measured according to JIS K 6253.
(2) Elongation set: Measured according to JIS K 6262.
(3) Tensile strength at break and tensile elongation at break: Measured according to JIS K 6251.
(4) Gloss: Glossiness was measured using a gloss meter GM-26 (a product of Murakami Shikisai Kenkyusho), at an incident angle of 60°.
(5) Abrasion resistance: DIN abrasion test was conducted according to JIS K 6264 to measure abrasion volume and abrasion resistance index.
(6) Specific gravity: Measured according to JISK 7112.
(7) Mar resistance test 1: Using a Taber scratch tester produced by Toyoseiki Seisakusho Co., a metal nail to which a 10-kg load had been applied, was scanned on a molded sheet. This operation was repeated, with increasing the load by 10 kg each, until the surface of the molded sheet came to have mar. A load when the molded sheet surface first had mar, was recorded. In this test, as the recorded load is larger, the mar resistance of the molded sheet is higher.
(8) Mar resistance test 2: A molded sheet was rubbed at the surface with a thumbnail and the surface was observed visually. The molded sheet was rated as O when there was no mar and as x when there was mar.

### (Comparative Example 1)

100 parts by mass of a particular, functional group-containing copolymer (A-1) and 0.2 part by mass of an antioxidant were each independently fed into a 10-liter dual arm pressure kneader (a product of Moriyama Co.) heated at 230°C, and were kneaded at 40 rpm for 20 minutes at a shear rate of 200 s⁻¹. Then, the molten, lumpy, kneaded material obtained was fed into a feeder ruder (a product of Moriyama Co.) set at 180°C and 40 rpm, to obtain a pelletized material. The pellets obtained were press-molded in the same manner as in Example 1 to obtain a molded sheet. The molded sheet was evaluated. The results are shown in Table 1.

### (Examples 2 to 7 and Comparative Example 2)

Individual components were fed, in the compounding proportions shown in Table 1, into a 10-liter dual arm pressure kneader (a product of Moriyama Co.) heated at 230°C, and were kneaded at 40 rpm for 20 minutes. Then, each molten, lumpy, kneaded material obtained was fed into a feeder ruder (a product of Moriyama Co.) set at 180°C and 40 rpm to obtain a pelletized ionomer or a pelletized ionomer composition.
The ionomer pellets obtained or the ionomer composition pellets obtained were press-molded in the same manner as in Example 1 to obtain a molded sheet. Each sheet was evaluated. The results are shown in Table 1.

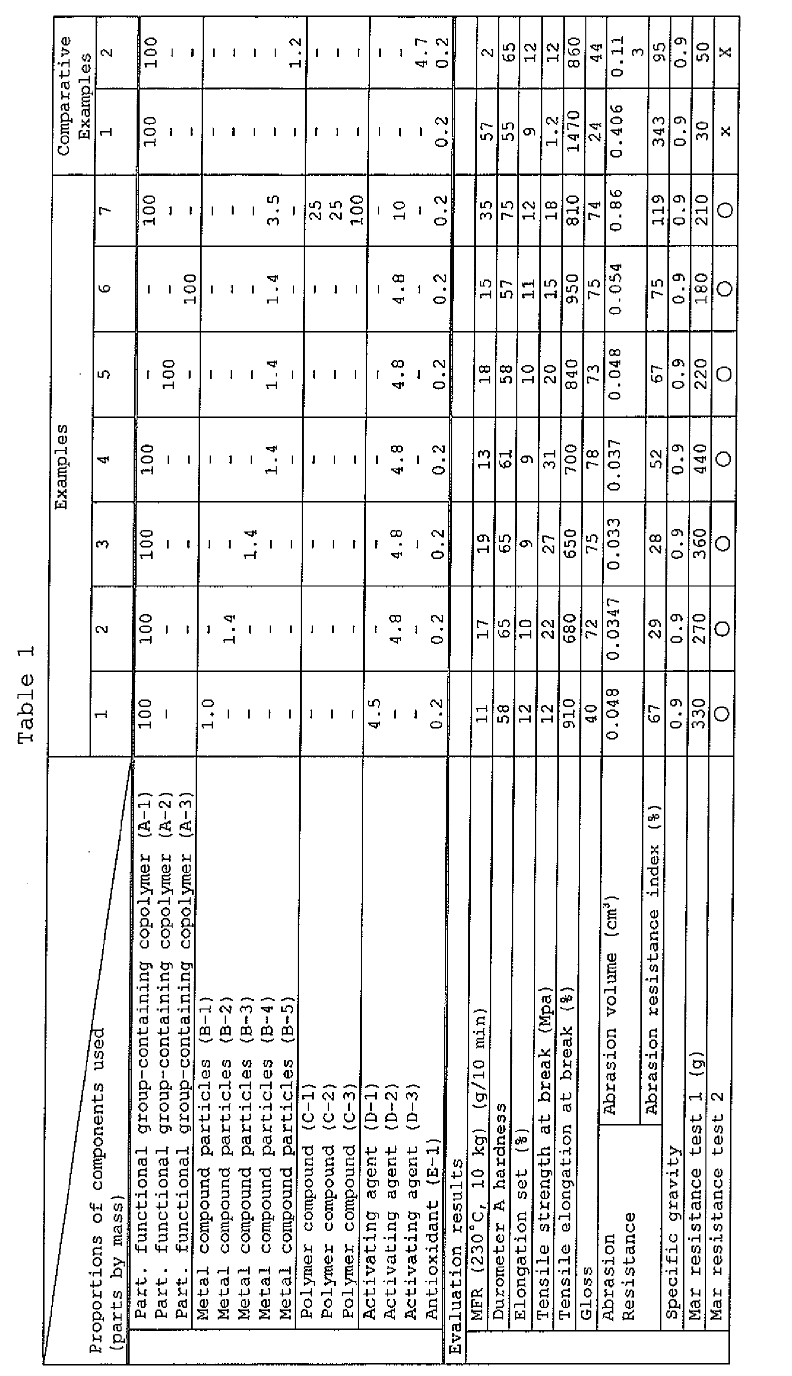

As is clear from Table 1, the ionomers and compositions thereof according to Examples 1 to 7 were superior in any of mechanical strengths, mar resistance, gloss, rubber elasticity and abrasion resistance. In contrast, in Comparative Example 1, since there was used a copolymer not cross-linked by a metal ion, the mechanical strengths, rubber elasticity, mar resistance and abrasion resistance were low. In Comparative example 2, since there were used metal compound particles having an average particle diameter of 6.1 µm, the mar resistance was low.

### [Examples for the second embodiment of the ionomer of the present invention]

The following components were used in the following Examples and Comparative Examples.

### (Olefin-based random copolymer (F))

In a 300-ml three-necked flask sufficiently purged with nitrogen were placed 32.8 g (150 mmol) of 4-methyltetracyclo [6.2.1.1^{3,6}. 0^{2,7}] dodec-9-ene-4-carboxylic acid, 200 ml of dried tetrahydrofuran and 13.1 g (165 mmol) of dried pyridine. To this reaction system was dropwise added slowly 24.9 g (165 mmol) of triethylchlorosilane at 0°C. After the dropwise addition, the mixture was stirred at room temperature for 5 hours to give rise to a reaction. The, the reaction mixture was filtered and the filtrate was concentrated. Then, 100 ml of n-hexane was added to the concentrate, followed by stirring for 1 hour. The mixture was filtered. The filtrate was concentrated and the concentrate was subjected to distillation under pressure reduction at 143 to 147°C at 1.5 mmHg to obtain 4-methyltetracyclo[6.2.1.1^{3,6}.0^{2,7}]dodec-9-ene-4-carboxylic acid triethylsilyl.

In a 2-liter separable flask purged with nitrogen were placed 1,000 ml of hexane (as a solvent), 3.5 ml of a hexane solution containing 1.0 mol/liter of 4-methyltetracyclo [6.2.1.1^{3,6}.0^{2,7}] dodec-9-ene-4-carboxylic acid triethylsilyl, and 2 ml of 5-ethylidene-2-norbornene.
Thereto was continuously fed, at 20°C, a mixed gas of ethylene (5.0 liter/min) and propylene (4.5 liter/min). 5 minutes later, 3.66 ml of a hexane solution containing 0.32 mol/liter of VOCl₃ was added into the 2-liter separable flask. 5 minutes later, 20.7 ml of a hexane solution containing 0.41 mol/liter of Al₂ (C₂H₅) ₃Cl₃ was added into the 2-liter separable flask, and addition polymerization of monomers was initiated. The addition polymerization was conducted at 25°C for 10 minutes. The, to the polymerization mixture was added 4.8 ml of acetic acid to terminate the polymerization reaction.

The polymerization mixture was washed with 500 ml of water and then poured into a large amount of methanol to separate out a copolymer. The copolymer was vacuum-dried to obtain 21.1 g of a white, olefin-based random copolymer (F).

The olefin-based random copolymer was analyzed. It contained 73.18 mol % of a structural unit derived from ethylene, 25.50 mol % of a structural unit derived from propylene, 0.94 mol % of a structural unit derived from 5-ethylidene-2-norbornene, and 0.38 mol % of a structural unit derived from 4-methyltetracyclo [6.2.1.1^{3,6}.0^{2,7}] dodec-9-ene-4-carboxylic acid triethylsilyl. The polymer had a polystyrene-reduced weight-average molecular weight (Mw) of 25.5x10⁴ as measured by gel permeation chromatography using o-dichlorobenzene as a solvent. The infrared absorption spectrum of the olefin-based random copolymer obtained is shown in Fig. 1.

### (Olefin-based random copolymer (G))

17.7 g of a white olefin-based random copolymer (G) was obtained in the same manner as in the case of the olefin-based random copolymer (F) except that the 4-methyltetracyclo[6.2.1.1^{3,6}. 0^{2,7}]dodec-9-ene-4-carboxylic acid triethylsilyl was changed to 4-methyltetracyclo[6.2.1.1^{3,6}. 0^{2,7}]dodec-9-ene-4-carboxylic acid tert-butyldimethylsilyl.

The olefin-based random copolymer was analyzed. It contained 74.36 mol % of a structural unit derived from ethylene, 22.95 mol % of a structural unit derived from propylene, 2.30 mol % of a structural unit derived from 5-ethylidene-2-norbornene, and 0.39 mol % of a structural unit derived from 4-methyltetracyclo [6.2.1.1^{3,6}.0^{2,7}] dodec-9-ene-4-carboxylic acid tert-butyldimethylsilyl. The polymer had a polystyrene-reduced weight-average molecular weight (Mw) of 22.2x10⁴ as measured by gel permeation chromatography using o-dichlorobenzene as a solvent.

### (Metal compound)

Metal compound: Zinc oxide [Nanofine W-1 (trade name) produced by Sakai kagaku Kogyo Co., average particle diameter: 0.01 µm]

### (Additives)

Activating agent: Zinc stearate [SZ-2000 (trade name) produced by Sakai kagaku Kogyo Co.]
Antioxidant: 2-[1-(2-Hydroxy-3,5-di-tert-pentylphenyl)ethyl]-4,6-di-tert-pentylphenyl acrylate [Sumilizer GS (trade name) produced by Sumitomo Chemical Co., Ltd.]
Weather resistant: Hindered amine weather resistant [Adekastab LA-502 (trade name) produced by Asahi Denka Kogyo K.K.]
Pigment: Polyethylene-based master batch containing 40% by mass of carbon black [Peony Black F-30940 MM (trade name) produced by Dainippon Ink and Chemicals, Incorporated]

### (Example 8)

100 parts by mass of an olefin-based random copolymer (F), 1.4 parts by mass of a metal compound, 4.8 parts by mass of an activating agent, 0.2 part by mass of an antioxidant, 0.3 part by mass of a weather resistant and 1.25 parts by mass of a pigment were each independently fed into a 10-liter dual arm pressure kneader (a product of Moriyama Co.) heated at 230°C, and were kneaded at 40 rpm for 20 minutes at a shear rate of 200 s⁻¹. Then, the molten, lumpy, kneaded material obtained was fed into a feeder ruder (a product of Moriyama Co.) set at 180°C and 40 rpm, to obtain a pelletized ionomer. The ionomer pellets obtained were press-molded using an electrically heated press molder (a product of Kansai Roll) under the conditions of die temperature = 180°C, pressing and heating time = 10 minutes and pressing and cooling time = 5 minutes, to obtain a molded sheet of 12 cm x 12 cm x 0.2 cm.

### (Evaluation of ionomer)

The ionomer obtained was measured for melt flow rate (MFR) as an index of fluidity under the conditions of temperature = 230°C and load = 10 kg, according to JIS K 7210. The result is shown in Table 2. The obtained molded sheet of ionomer was measured for durometer A hardness (as an index of flexibility), elongation set (as an index of rubber elasticity), tensile strength at break and tensile elongation at break (both as mechanical strengths), abrasion resistance and specific gravity according to the following methods, and further was subjected to the following mar resistance test 1 and mar resistance test 2. The results are shown in Table 2.

(1) Hardness (durometer A hardness): Measured according to JIS K 6253.
(2) Elongation set: Measured according to JIS K 6262.
(3) Tensile strength at break and tensile elongation at break: Measured according to JIS K 6251.
(4) Abrasion resistance: DIN abrasion test was conducted according to JIS K 6264 to measure abrasion volume and abrasion resistance index.
(5) Specific gravity: Measured according to JISK 7112.
(6) Mar resistance test 1: Using a Taber scratch tester produced by Toyoseiki Seisakusho Co., a metal nail to which a 10-kg load had been applied, was scanned on a molded sheet. This operation was repeated, with increasing the load by 10 kg each, until the surface of the molded sheet came to have mar. A load when the molded sheet surface first had mar, was recorded. In this test, as the recorded load is larger, the mar resistance of the molded sheet is higher.
(7) Mar resistance test 2: The surface of a molded sheet was rubbed with a thumbnail and the mar was rated visually according to the following yardstick (1 and 2 are each a pass level).
   1: No mar
   2: Slight mar but the mar disappears by restoration.
   3: Slight mar
   4: Deep mar

### (Example 9)

A pelletized ionomer and a molded sheet thereof were produced in the same manner as in Example 8 except that an olefin-based random copolymer (G) was used in place of the olefin-based random copolymer (F). The ionomer and the molded sheet thereof were evaluated in the same manner as in [0161]. The results are shown in Table 2.

### (Comparative Example 3)

The operation of Example 9 was repeated except that neither metal compound nor activating agent was used, to produce a pelletized, olefin-based thermoplastic elastomer and a molded sheet thereof. The olefin-based thermoplastic elastomer and the molded sheet thereof were evaluated in the same manner as in [0161]. The results are shown in Table 2.

**Table 2**

| | Example 8 | Example 9 | Comparative Example 3 |
|---|---|---|---|
| Polymer (F) | 100 | 1 | - |
| Polymer (G) | - | 100 | 100 |
| Metal compound | 1.4 | 1.4 | 0 |
| Activating agent | 4.8 | 4.8 | 0 |
| Antioxidant | 0.2 | 0.2 | 0.2 |
| Weather resistant | 0.3 | 0.3 | 0.3 |
| Pigment | 1.25 | 1.25 | 1.25 |
| MFR (230°C, 10 kg) (g/10 min) | 21 | 14 | 30 |
| Hardness (durometer A) | 61 | 64 | 61 |
| Tensile strength at break (Mpa) | 9.6 | 10.4 | 4.5 |
| Tensile elongation at break (%) | 780 | 650 | 1130 |
| Elongation set (%) | 10 | 9 | 15 |
| Abrasion volume (cm³) | 0.048 | 0.03 | 0.186 |
| Abrasion resistance index (%) | 40 | 25 | 154 |
| Mar resistance test 1 | 500g or more | 500 g or more | 60 g |
| Mar resistance test 2 | 1 | 1 | 4 |
| Specific gravity | 0.9 | 0.9 | 0.9 |

As is clear from Table 2, the ionomers of Examples 8 and 9 are each superior in rubber elasticity, flexibility, moldability (fluidity), mechanical properties, abrasion resistance and mar resistance. In contrast, the olefin-based thermoplastic elastomer of Comparative Example 3 contains neither metal compound nor activating agent; therefore, it is low particularly in tensile strength at break and inferior in abrasion resistance and mar resistance.

### Industrial Applicability

The ionomer of the present invention contains an ionomer superior in rubber elasticity, flexibility, moldability, mar resistance and abrasion resistance; therefore, it can be used in various molded articles such as automobile parts and the like, as a substitute material for metal parts, a substitute material for RIM urethane parts, a substitute material for vulcanized rubber, a substitute material for soft polyvinyl chloride, etc. Specifically, the ionomer of the present invention can be used extensively in automotive applications such as bumper, mall as exterior trim, gasket for wind shielding, gasket for door shielding, gasket for trunk sealing, roof side rail, emblem, inner panel, door trim, skin material for inner or outer trim (e.g. console box), weather strip and the like; mar-resistant leather sheet; aircraft and ship applications such as sealing material, skin material for inner or outer trim, and the like; civil engineering and construction applications such as sealing material, skin material for inner or outer trim, water-proof sheet, and the like; general machinery and equipment applications such as sealing material and the like; light electric appliance applications such as packing, skin material, housing and the like; roll and cleaning blade for information appliances; film for electronic parts; sealing material; protective film for image (e.g. picture); decorative film for construction material; part for medical instruments; electric wire; ordinary processed products such as daily sundry, sporting goods and the like; CMP pad for semiconductor polishing; various films for electronic parts, such as protective film, impact-absorbing film, polarizing film, film for absorption of particular wavelength, and the like; and protective film used in production of flat panel display (FPD) for semiconductor apparatus, liquid crystal display apparatus, etc. The ionomer of the present invention can be produced efficiently by the process for producing an ionomer according to the present invention.

## Claims

1. An ionomer obtained by reacting metal compound particles having an average particle diameter of 1 µm or less, with a functional group-containing polymer.

2. An ionomer according to Claim 1, wherein a proportion of the metal compound particles is 0.01 to 10 parts by mass relative to 100 parts by mass of the functional group-containing polymer.

3. An ionomer according to Claim 1 or 2, wherein a metal component in the metal compound particles is at least one kind of metal selected from the group consisting of sodium, magnesium, calcium, zirconium, zinc and aluminum.

4. An ionomer according to Claim 1 or 2, wherein the metal compound particles are made of zinc oxide.

5. An ionomer according to any of Claims 1 to 4, wherein the functional group-containing polymer is an olefin-based random copolymer obtained by copolymerizing ethylene, an α-olefin having 3 to 10 carbon atoms, a functional group-containing unsaturated monomer and, as necessary, a non-conjugated diene.

6. An ionomer according to Claim 5, wherein a functional group in the functional group-containing unsaturated monomer is carboxyl group, hydroxyl group, epoxy group or sulfonic acid group.

7. An ionomer according to Claim 5, wherein the functional group-containing unsaturated monomer is a functional cyclic compound represented by the following general formula (1): 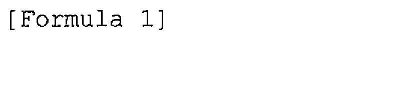 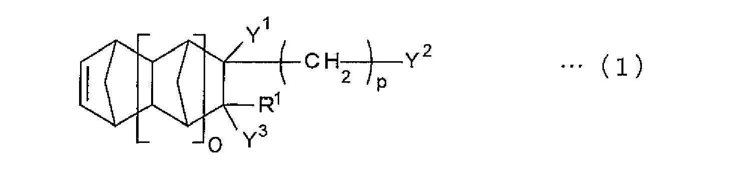 [in the general formula (1), R¹ is a hydrogen atom or a hydrocarbon group having 1 to 10 carbon atoms; Y¹, Y² and Y³ are each independently a hydrogen atom, a hydrocarbon group having 1 to 10 carbon atoms or -COOH with a proviso that at least one of Y¹, Y² and Y³ is -COOH and, when two or more of Y¹, Y² and Y³ are -COOH, they may combine to each other to form an acid anhydride [-CO-(O)-CO-]; o is an integer of 0 to 2; and p is an integer of 0 to 5].

8. An ionomer according to Claim 5, wherein the olefin-based random copolymer is a copolymer obtained by copolymerizing 35 to 94.99 mol % of ethylene, 5 to 50 mol % of an α-olefin having 3 to 10 carbon atoms, 0.01 to 5 mol % of a functional cyclic compound represented by the general formula (1) and 0 to 10 mol % of a non-conjugated diene.

9. A process for producing an ionomer, which comprises a step of subjecting a functional group-containing polymer to a heat treatment or a dynamic heat treatment in the presence of metal compound particles having an average particle diameter of 1 µ m or less.

10. A molded article obtained by molding a molding material containing an ionomer set forth in any of Claims 1 to 8, by a molding method selected from injection molding, extrusion molding, vacuum molding, powder slush molding, calender molding, transfer molding, solvent casting and press molding.

11. A process for producing an ionomer, which comprises subjecting, to a dynamic heat treatment, a metal compound and an olefin-based random copolymer obtained by copolymerizing ethylene, an α-olefin having 3 to 10 carbon atoms and a functional cyclic compound represented by the following general formula (2): 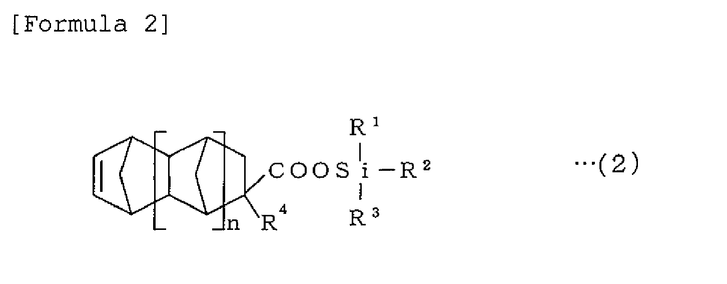 [in the general formula (2), n is 0 or 1; and R¹, R², R³ and R⁴ are each independently a hydrogen atom, a halogen atom or a mono-valent organic group].

12. A process for producing an ionomer according to Claim 11, wherein R¹, R², R³ and R⁴ are each independently a hydrogen atom or a hydrocarbon group having 1 to 20 carbon atoms in the above mentioned general formula (2).

13. A process for producing an ionomer according to Claim 11 or 12, wherein all of R¹, R² and R³ are an ethyl group, or one of R¹, R² and R³ is a tert-butyl group and the remaining two are each a methyl group in the above mentioned general formula (2).

14. A process for producing an ionomer according to any of Claims 11 to 13, wherein, in the above mentioned general formula (2), R⁴ is a methyl group.

15. A process for producing an ionomer according to any of Claims 11 to 14, wherein the olefin-based random copolymer is obtained by copolymerizing 35 to 94.99 mol % of the ethylene, 5 to 50 mol % of the α-olefin having 3 to 10 carbon atoms and 0.01 to 5 mol % of the functional cyclic compound represented by the above mentioned general formula (2), and 100 parts by mass of the olefin-based random copolymer and 0.1 to 20 parts by mass of the metal compound are subjected to a dynamic heat treatment at 120 to 350°C at a shear rate of 10 to 2,000/sec.

16. A process for producing an ionomer according to any of Claims 11 to 15, wherein the olefin-based random copolymer is obtained by copolymerizing the ethylene, the α-olefin having 3 to 10 carbon atoms, the functional cyclic compound represented by the above mentioned general formula (2) and a non-conjugated diene.

17. A process for producing an ionomer according to Claim 16, wherein the olefin-based random copolymer is obtained by copolymerizing the ethylene, the α-olefin, the functional cyclic compound represented by the above mentioned general formula (2) and 10 mol % or less of the non-conjugated diene.

18. A process for producing an ionomer according to any of Claims 11 to 17, wherein the metal compound is a metal oxide or a metal hydroxide.

19. An ionomer obtained a process for producing an ionomer set forth in any of Claims 11 to 18.

20. A process for producing an ionomer composition, which comprises subjecting 100 parts by mass of an olefin-based random copolymer obtained by copolymerizing 35 to 94.99 mol % of ethylene, 5 to 50 mol % of an α-olefin having 3 to 10 carbon atoms, 0.01 to 5 mol % of a functional cyclic compound represented by the following general formula (2) and 0 to 10 mol % of a non-conjugated diene, 0.1 to 20 parts by mass of a metal compound, and 300 parts by mass or less of a polymer compound selected from a thermoplastic resin and a rubber and/or 100 parts by mass or less of a softening agent, to a dynamic heat treatment at 120 to 350°C at a shear rate of 10 to 2,000/sec: 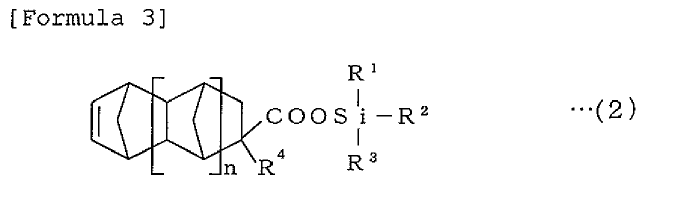 [in the general formula (2), n is 0 or 1; and R¹, R², R³ and R⁴ are each independently a hydrogen atom, a halogen atom or a mono-valent organic group].

21. An ionomer composition obtained by a process for producing an ionomer composition set forth in Claim 20.
